# NOUVEAU FASCICULE DE BREVET EUROPEEN

(11) **EP 2 872 593 B2**
(45) Date de publication et mention de la décision concernant l'opposition: **25.11.2020**
(45) Mention de la délivrance du brevet: 03.01.2018
(21) Numéro de dépôt: 13736574.8
(22) Date de dépôt: 12.07.2013
(51) Int. Cl.: C09K 21/02, C08K 3/22, C08K 3/00

(54) **CHARGES MINÉRALES IGNIFUGES ET COMPOSITIONS POLYMÈRES IGNIFUGÉES**
FLAMMHEMMENDE MINERALISCHE FÜLLSTOFFE UND FLAMMHEMMENDE POLYMERZUSAMMENSETZUNGEN
FLAME-RETARDANT MINERAL FILLERS AND FLAME-RETARDANT POLYMER COMPOSITIONS

(30) Priorité: 12.07.2012 BE 201200487; 05.09.2012 US 201261696958 P
(43) Date de publication de la demande: 20.05.2015
(73) Titulaire: S.A. Lhoist Recherche et Développement, 1342 Ottignies-Louvain-la-Neuve (BE)
(72) Inventeur: LORGOUILLOUX, Marion, B-7110 Strépy Bracquegnies (BE); LESUEUR, Didier, B-1440 Braine-le-Château (BE); CHOPIN, Thierry, B-1180 Uccle (BE); LAOUTID, Fouad, F-59130 Lambersart (FR); DUBOIS, Philippe, B-4260 Braives (BE)
(74) Mandataire: Gevers Patents
(86) Numéro de dépôt international: PCT/EP2013/064764
(87) Numéro de publication internationale: WO 2014/009510

(56) Documents cités:
- EP-B1- 1 896 364
- DE-A1-102009 034 700
- US-A1- 2005 113 500
- US-A1- 2006 188 428
- Deadmore, D.L.: "Effects of Haydration Procedures and Calcination in the Presence of NaCl on the Properties of Lime Hydrates",

## Description

La présente invention se rapporte au domaine des compositions polymères ignifugées et donc des charges minérales ignifuges ou ignifugeantes à ajouter à des polymères comme additif retardateur de flamme comprenant un composé calcique et un composé magnésien.

Les additifs retardateurs de flamme (*flame retardant* en anglais) ou additifs ignifuges ou encore ignifugeants sont incorporés dans des matrices polymères afin de ralentir ou stopper la combustion du polymère dans le cas d'un incendie. On distingue entre autres deux catégories d'effets de ces additifs retardateurs de flamme (appelés charges dans la suite du texte), à savoir les effets chimiques et les effets physiques.

Parmi les effets chimiques, on trouve l'accélération de la rupture des chaînes du polymère sous l'effet de la température qui conduit à un polymère fondu qui va goutter et quitter la zone chaude de l'incendie. On trouve aussi, dans le cas des systèmes à base de retardateurs de flamme phosphorés, la formation d'une couche de charbonnement par réaction entre la charge et le polymère, cette couche sert ensuite de barrière et empêche le dégagement de gaz combustibles qui alimentent l'incendie. Egalement, on retrouve des charges qui, lors de la montée en température, libèrent des composés non inflammables ou qui piègent les radicaux libres présents dans la phase gazeuse. Certains de ces effets chimiques sont obtenus en utilisant des charges halogénées (bromures et chlorures) qui sont progressivement abandonnées pour des raisons toxicologiques et environnementales.

Parmi les effets physiques, on trouve la réaction de décomposition endothermique de la charge qui provoque le refroidissement du polymère et la libération de gaz inertes comme de la vapeur d'eau ou du CO₂ qui vont agir ensuite comme diluants des gaz comburants et combustibles. Enfin, on trouve également la formation d'une couche protectrice issue de la dégradation de la charge, couche qui va à nouveau empêcher la libération de gaz combustibles. Ces effets physiques sont généralement obtenus avec des charges (fillers) minérales.

De manière générale, les compositions comprenant d'une part les charges minérales et d'autre part les polymères doivent présenter certaines caractéristiques pour être applicables en pratique. Tout d'abord, l'effet retardateur de flamme doit pouvoir être quantifié afin d'évaluer l'intérêt de telles compositions. La méthode normalisée du cône calorimètre (ISO 5660-1 ou ASTM E 1354) est utilisée pour déterminer le dégagement de chaleur (noté HRR pour Heat Rate Release et exprimé en kW/m²) d'une composition de polymère contenant éventuellement des charges minérales, lorsque celle-ci est exposée à un niveau contrôlé de chaleur rayonnante. Cette méthode, nommée ci-après « test au feu », permet en outre de déterminer l'inflammabilité, la perte de masse, la production de fumées ou encore la chaleur de combustion d'une composition. Pour un polymère chargé, une quantité peu élevée de chaleur traduit un bon effet retardateur de flamme des charges minérales.

Il existe d'autres méthodes pour évaluer l'effet retardateur de flamme. Le LOI (Limiting Oxygen Index) sert à illustrer l'inflammabilité relative des matériaux selon la norme (ASTM D 2863) et correspond au taux d'oxygène limite (dans un mélange O₂-N₂) en-deçà duquel la combustion, dûment amorcée, ne se propage pas et au-delà duquel elle se propage. Le taux d'oxygène étant de 21% dans l'atmosphère, les matériaux ayant un LOI inférieur à 21 seront classés « combustibles », alors que les matériaux pour lesquels le LOI est supérieur à 21 seront classés « auto-extinguibles », leur combustion ne peut se propager sans un apport externe d'énergie.

L'essai dit de "I"épiradiateur" (NF P92-505) consiste à soumettre une plaque de dimensions 70 mm x 70 mm x 4 mm, à un rayonnement calorifique constant (500 W) et à provoquer éventuellement l'inflammation des gaz dégagés. Dès que la plaque s'enflamme, le radiateur est écarté après 3 secondes, puis remis dans sa position initiale quand l'éprouvette s'éteint. Cette opération est renouvelée pendant un temps minimum de 5 minutes. Ce test permet de quantifier la résistance à l'inflammation d'un matériau (temps d'ignition) et son autoextinguibilité (nombre d'inflammations).

Il existe encore d'autres méthodes, qui correspondent généralement à des applications précises des polymères chargés (câbles, appareillage électrique, accessoires électriques...) parmi lesquels l'essai d'inflammation UL94, les diverses modalités de l'essai dit « du fil incandescent » (IEC 60695-2), le cône calorimètre adapté aux câbles (EN 50399)...

Par ailleurs, étant donné la proportion élevée de ces charges minérales dans les compositions, il est important d'évaluer l'impact que les charges minérales ont sur les propriétés mécaniques des compositions polymères. Dès lors, les polymères chargés devront présenter des caractéristiques de résistance mécanique (traction, impact) acceptables.

Ces caractéristiques de résistance mécanique sont notamment évaluées par des essais de traction, par exemple selon la norme ASTM D638 ou ISO 527-1 avec une vitesse d'élongation de 50 mm/min. Cette méthode permet la détermination de l'élongation à la rupture en pourcents. Par ailleurs, la résistance à l'impact est quantifiée selon la norme ISO EN 179-2 qui détermine la résilience en kJ/m².

Les charges minérales les plus courantes à utiliser avec des polymères pour obtenir un effet retardateur de flamme sont principalement le trihydroxyde d'aluminium Al(OH)₃, également appelé ATH et le dihydroxyde de magnésium Mg(OH)₂, aussi appelé MDH.

Le trihydroxyde d'aluminium représente une part majeure du marché actuel des additifs retardateurs de flamme. Sa température de dégradation est de l'ordre de 220°C. Cette dégradation endothermique consomme 1050 kJ/kg et conduit à la formation d'une couche protectrice d'oxyde d'aluminium Al₂O₃.

La température de décomposition de l'ATH étant basse en comparaison de celle d'autres charges minérales, le trihydroxyde d'aluminium n'est approprié que pour des polymères présentant également de faibles températures de mise en forme. De même, des techniques de compoundage à basse température doivent être utilisées (extrudeuse Buss typiquement). Malheureusement, pour avoir un effet retardateur de flamme efficace, l'ATH doit être ajouté à la matrice polymère à hauteur de 50-75% en poids de la composition comprenant le polymère et la charge, ce qui entraîne une forte dégradation des propriétés mécaniques de la composition en comparaison des propriétés mécaniques du polymère non chargé.

A l'heure actuelle, la principale alternative non halogénée à l'ATH est le MDH. Cet hydroxyde minéral (Mg(OH)₂), se décompose à une plus haute température que l'ATH. Cela permet de l'utiliser dans un plus vaste choix de polymères et avec des équipements de mise en forme plus économiques (extrudeuse bi-vis typiquement). Le MDH représente des parts de marché bien inférieures en comparaison de celles de l'ATH. Toutefois, il suscite un intérêt croissant ces dernières années. La température de dégradation du dihydroxyde de magnésium est d'environ 330°C et cette dégradation endothermique consomme 1300 kJ/kg. La dégradation de MDH produit MgO qui forme une couche protectrice jusqu'à haute température.

A nouveau, comme pour l'ATH, la teneur en MDH est généralement comprise entre 50 et 75 % en poids de la composition comprenant le polymère et la charge, ce qui dégrade les propriétés mécaniques de cette composition en comparaison de celles du polymère non chargé. De plus, la voie de synthèse d'un tel hydroxyde est compliquée rendant cette charge minérale plutôt prohibitive.

Le dihydroxyde de calcium, Ca(OH)₂, souvent obtenu par hydratation (extinction) d'une chaux vive, se décompose de manière endothermique (consommation de 900 kJ/kg) autour de 400 °C en libérant de l'eau et en donnant lieu à la formation d'un oxyde, CaO. Ca(OH)₂ apparaît de ce fait comme un hydroxyde minéral présentant toutes les propriétés nécessaires pour pouvoir être utilisé en tant que charge retardatrice de flamme. Toutefois, la température de décomposition de Ca(OH)₂ est élevée en comparaison de celles de l'ATH et du MDH, et Ca(OH)₂ n'est donc efficace en tant que retardateur de flamme qu'à relativement haute température, le risque étant qu'à cette température, le polymère soit déjà totalement dégradé. Par ailleurs, du fait de sa forte basicité (pH supérieur à 12), Ca(OH)₂ peut être utilisé en tant que charge uniquement dans des matrices polymères dont les propriétés ne sont pas dégradées au contact de particules de pH élevé. Ca(OH)₂ est de ce fait moins courant que l'ATH et le MDH.

On connait également de l'état de la technique, l'utilisation comme retardateur de flamme de composés de formule générale Ca(OH)₂.Mg(OH)₂.

Par exemple, le document US 5,422,092 décrit une charge retardatrice de flamme plus efficace que l'hydroxyde de magnésium (ce qui permet d'en utiliser de moins grandes quantités), et également moins chère (ce qui permet de limiter les coûts de production des polymères). La charge selon cet enseignement est un hydroxyde métallique composite de type solution solide et de formule générale Ca₁₋ₓM²⁺ₓ(OH)₂ où M est l'un au moins des métaux Mg, Mn, Fe, Co, Ni, Cu et Zn et où x est compris entre 0,001 et 0,995.

Le document EP 0541329 est très similaire au document US 5,422,092 décrit ci-dessus, mais la solution solide obtenue est un hydroxyde métallique composite de formule Ca₁₋ₓM²⁺ₓ(OH)₂ où M est au moins un métal divalent parmi Mg, Mn, Fe, Co, Ni, Cu et Zn et où x est cette fois compris entre 0,005 et 0,400.

Le document FR 2574083 décrit une charge pulvérulente pour matières plastiques, notamment pour polyoléfines, à base de dolomies ou de calcaires dolomitiques, de composition : xMg(OH)₂.yCa(OH)₂.zCaCO₃, tout le MgO ayant été hydraté sous pression. C'est donc une dolomie semi-calcinée et totalement hydratée. Les teneurs en CaCO₃ et en Ca(OH)₂ sont très variables et dépendent du degré de calcination de la dolomie.

Le brevet DE102009034700 décrit quant à lui l'obtention par des procédés décrits comme simples et économiques de compositions à base de calcium et/ou de magnésium à partir de produits naturels à base de calcium et/ou de magnésium. Ces compositions sont submicroniques voire nanométriques (particules primaires < 300 nm, voire < 200 nm, voire < 100 nm).La synthèse de telles particules submicroniques voire nanométriques implique le recours à des conditions de calcination adaptées des produits naturels (température et durée de calcination). Par ailleurs, dans le cas particulier des particules de dolomie hydratée, l'hydratation des particules d'oxyde obtenues par calcination des produits naturels dans les conditions particulières susmentionnées, doit être réalisée sous pression afin de garantir une teneur en MgO résiduel satisfaisante (< 10 % en masse).

Le document US 2006/0188428 décrit un additif pour plastiques obtenu par calcination puis hydratation d'une dolomie et composé principalement de carbonate de calcium (CaCO₃) carbonate de magnésium (MgCO₃) oxyde de magnésium (MgO), hydroxyde de calcium (Ca(OH)₂) et hydroxyde de magnésium (Mg(OH)₂). Cet additif est utilisé pour ces propriétés antimicrobiennes et pour sa capacité à capter l'acide chlorhydrique qui est libéré lors de la combustion de compositions à base de chlorure de polyvinyle (PVC). Dans cet additif, la proportion d'oxyde de magnésium est toujours inférieure à celle d'hydroxyde de magnésium.

La possibilité de combiner l'utilisation de Mg(OH)₂ et de Ca(OH)₂ en tant que charges retardatrices de flamme dans une matrice polymère apparaît comme présentant un certain nombre d'avantages. En effet, la composante Mg(OH)₂ d'une telle formulation jouerait son rôle de retardateur de flamme autour de 300 °C, donnerait leu à la formation d'une couche de charbonnement, phénomène bien connu dans le cas de l'utilisation de Mg(OH)₂ seul (MDH), et conduirait progressivement à la formation d'une couche protectrice de MgO. En parallèle, la composante Ca(OH)₂ commencerait à se décomposer autour de 400 °C, jouant un second rôle de retardateur de flamme. Contrairement à l'ATH, cette combinaison devrait pouvoir être utilisée dans un grand nombre de matrices polymères du fait des hautes températures de décomposition de Mg(OH)₂ et de Ca(OH)₂, avec les équipements traditionnellement utilisés pour l'extrusion de pièces polymères chargées avec du MDH, et aurait un effet retardateur de flamme sur une gamme de température plus large que celle couverte simplement par du MDH.

La présente invention a donc pour but d'utiliser des charges minérales comprenant un composé calcique et un composé magnésien permettant d'améliorer la tenue au feu de compositions polymères selon les mécanismes classiques des retardateurs de flamme de type hydroxydes métalliques tels que l'ATH et le MDH, tout en conservant ou prodiguant des caractéristiques mécaniques acceptables pour la composition polymère contenant la charge minérale. Idéalement, cette charge minérale devrait en outre permettre d'atteindre un résidu de combustion susceptible de constituer une barrière de résistance au feu avantageuse.

A cette fin, l'invention utilise donc une charge minérale pulvérulente qui est ignifuge ou ignifugeante, comprenant un composé calcique et un composé magnésien qui est caractérisée en ce que ladite charge minérale comprend une dolomie semi-hydratée répondant à la formule générale aCaCO₃.bCa(OH)₂.cMg(OH)₂.dMgO.eCaO, a,b,c,d et e étant des fractions molaires avec (a + b + e)/(c + d) étant compris entre 0,8 et 1,2 et avec d/c étant supérieur à 1 et présentant des valeurs telles que b représente la fraction molaire correspondant à une proportion en poids ≥ 15%, c représente la fraction molaire correspondant à une proportion en poids ≥ 1 %, d représente la fraction molaire correspondant à une proportion en poids ≥ 1 %, a et e représentant respectivement des fractions molaires correspondant à des proportions en poids étant toutes deux ≥ 0 %, lesdites proportions en poids étant données par rapport au poids total de ladite dolomie semi-hydratée, et en ce que ladite charge minérale comprend des agglomérats d'agrégats de particules.

Par les termes « particules » au sens de la présente invention, on entend la plus petite discontinuité solide de la charge minérale observable par microscopie électronique à balayage (MEB).

Par les termes « agrégats de particules », on entend, au sens de la présente invention un ensemble cohésif de particules.

Par les termes « agglomérats de particules », on entend, au sens de la présente invention un ensemble lâche d'agrégats de particules et/ou de particules, qui peut être facilement détruit par des moyens mécaniques (ultrasons, agitation, cisaillement, vibration...).

Comme on peut le constater, la présente invention décrit l'utilisation non pas de mélanges physiques, mais bien d'un composé unique apportant à la fois du Mg(OH)₂, du Ca(OH)₂ et du MgO. Ce composé est un dérivé dolomitique, également appelé dolomie semi-hydratée, obtenu par calcination puis hydratation (extinction à l'eau) partielle d'une dolomie naturelle. L'utilisation d'un composé unique au lieu de mélanges physiques de deux composés présente un avantage considérable au niveau pratique, puisque le procédé d'extrusion d'un polymère chargé sera plus facile lorsqu'une charge unique est utilisée au lieu de deux, réduisant par exemple le nombre de doseurs de poudres sur la ligne d'extrusion. De plus, l'homogénéité de la dispersion de Ca(OH)₂ et Mg(OH)₂ dans la matrice polymère est également améliorée lorsque ces deux composantes sont apportées via une charge unique, elle-même parfaitement homogène.

La charge minérale, de formule générale aCaCO₃.bCa(OH)₂.cMg(OH)₂.dMgO.eCaO présente donc d'une part l'avantage par rapport à un mélange physique d'apporter une composante Ca(OH)₂ et une composante Mg(OH)₂ de manière étroitement liée, permettant donc une incorporation parfaitement homogène dans une composition polymère ignifugée. Elle présente d'autre part l'avantage par rapport à une dolomie complètement hydratée d'être un produit bien plus aisé à obtenir. En effet, la dolomie totalement hydratée, pouvant être représentée par une formule molaire du type xCaCO₃.yCa(OH)₂.zMg(OH)₂ et contenant des résidus non hydratés CaO et/ou MgO uniquement à l'état de traces (moins de 1 %), souvent exprimée de manière simplifiée par une formule yCa(OH)₂.zMg(OH)₂, est difficile à obtenir, puisqu'elle requiert une hydratation complète de dolomie calcinée, généralement réalisée sous pression. La dolomie totalement hydratée de formule générale xCaCO₃.yCa(OH)₂.zMg(OH)₂ reste encore à l'heure actuelle un produit de spécialité.

La charge minérale est un produit comparable, cette fois assimilé à un produit de commodité. Il s'agit de la dolomie semi-hydratée dont l'hydratation est contrôlée et aisée à mettre en oeuvre, ce qui en fait un produit bien moins couteux que la dolomie totalement hydratée. Selon les propriétés de la source de dolomie naturelle et les conditions opératoires contrôlées de la calcination et de l'hydratation de cette dolomie, la dolomie semi-hydratée peut présenter un taux d'hydratation de MgO en Mg(OH)₂ variable, ainsi qu'une granulométrie et une composition chimique variables.

C'est grâce au contrôle de ces paramètres permettant la synthèse de dolomie semi-hydratée, qu'il a été mis en évidence une charge minérale particulièrement avantageuse en tant que charge minérale retardatrice de flamme lorsqu'elle est ajoutée à une composition polymère pour obtenir une composition polymère ignifugée. Ces compositions ignifugées comprenant la charge minérale présentent un avantage non négligeable en comparaison des compositions à base d'ATH ou de MDH en ce que le résidu de combustion recueilli à l'issue de la combustion du polymère est cohésif et peut même être qualifié de céramisé de sorte que le composé ignifuge (en anglais « flame retardant ») est également résistant au feu (en anglais « fire résistant »). En effet, au cours de la décomposition de la matrice polymère, de fortes concentrations de CO₂ sont libérées dans l'atmosphère de la zone de combustion. Ce CO₂ va réagir avec le Ca(OH)₂ présent initialement dans la charge de la composition selon l'invention ou avec la chaux CaO issue d'une dégradation partielle de ce Ca(OH)₂ pour former du carbonate de calcium de formule CaCO₃. Ce CaCO₃ est un solide cohésif qui ne s'effondre pas sous la forme de cendres comme c'est le cas du résidu obtenu en fin de combustion pour les compositions à base d'ATH et de MDH. Cet effet cohésif est particulièrement utile dans le cas des pièces plastiques utilisées dans les domaines électriques ou électroniques (équipement électrique ou électronique, cables électriques et/ou de communication...) ; en particulier pour les gaines de câbles électriques en polymères, il est préférable que, pendant le déroulement d'un incendie, la gaine de câble reste autour du câble conducteur afin de continuer d'en assurer le fonctionnement et d'éviter des courts-circuits.

A l'heure actuelle, il semble que cet effet cohésif, bien que très recherché et apprécié, ne soit obtenu qu'en présence de formulations complexes contenant de l'ATH ou du MDH en tant que charge retardatrice de flamme, associée avec des nanoparticules (argiles, nanotube de carbone, silice ...), du borate de zinc ... en tant qu'agent céramisant. Ces agents céramisants sont couteux, difficiles à incorporer au polymère et présentent pour nombre d'entre eux un profil écotoxique défavorable qui en limite l'usage et rend nécessaire la recherche de substituts.

Egalement, le captage du CO₂ lors de la combustion déplace l'équilibre de combustion vers la formation de CO₂ au détriment de CO, diminuant la toxicité des fumées. Ceci constitue un effet additionnel positif lié à l'emploi des charges.

Lorsqu'elle est chauffée à 5 °C/min sous air dans un appareil d'analyse thermique de type thermogravimétrie, la composante hydratée (Mg(OH)₂ et Ca(OH)₂) de la charge minérale se décompose entre 250 et 600 °C, en particulier entre 250 et 560 °C, plus particulièrement entre 250 et 520 °C. Cette décomposition se fait en deux étapes avec tout d'abord la décomposition de Mg(OH)₂ entre 250 et 450 °C, en particulier entre 250 et 420 °C, plus particulièrement entre 250 et 400 °C, suivie par la décomposition de Ca(OH)₂ entre 450 et 600 °C, en particulier entre 420 et 560 °C, plus particulièrement entre 400 et 520 °C. Une autre manière de décrire la décomposition de la charge dans les mêmes conditions de chauffage est d'utiliser la température à laquelle il reste 95 % de la masse initiale de l'échantillon, 5 % de cet échantillon ayant déjà été perdus par déshydroxylation. Cette température est notée T95% et est comprise entre 350 et 500 °C, en particulier entre 400 et 460 °C.

Dans une forme de réalisation avantageuse de la charge minérale ignifuge ou ignifugeante, lesdits agrégats de particules présentent un d₉₇ < 30 µm, de préférence < 20 µm, un d₉₀ < 15 µm, de préférence < 10 µm, un d₅₀ < 5 µm, de préférence < 4 µm et un d₃ > 0,3 µm, de préférence > 0,4 µm après mise en suspension dans du méthanol.

Dans une forme de réalisation avantageuse ledit d₉₇ des agrégats de particules est inférieur à 15 µm, de préférence inférieur à 10 µm, mesuré après mise en suspension dans du méthanol.

De préférence, ledit d₉₀ des agrégats de particules est inférieur à 7 µm, de préférence inférieur à 5 µm mesuré après mise en suspension dans du méthanol.

De manière plus préférentielle, ledit d₅₀ des agrégats de particules est inférieur à 3 µm mesuré après mise en suspension dans du méthanol.

Dans une forme de réalisation avantageuse de la charge minérale ignifuge ou ignifugeante, lesdits agglomérats d'agrégats de particules présentent un d₉₇ < 150 µm, de préférence < 100 µm, un d₉₀ inférieur à 30 µm, de préférence < 20 µm, un d₅₀ < à 8 µm, de préférence < 5 µm et un d₃ > 0,4, de préférence > 0,5 µm, mesurés après mise en suspension dans du méthanol.

Avantageusement, ledit d₉₇ des agglomérats de particules est inférieur à 80 µm, de préférence inférieur à 50 µm, mesuré après mise en suspension dans du méthanol.

Avantageusement, ledit d₉₀ des agglomérats de particules est inférieur à 15 µm, de préférence inférieur à 10 µm, mesuré après mise en suspension dans du méthanol.

De préférence, dans la charge minérale ledit d₅₀ des agglomérats de particules est inférieur à 4 µm, mesuré après mise en suspension dans du méthanol.

La distribution des tailles des agglomérats ou agrégats de particules et donc les valeurs de d₉₇, d₉₀, d₅₀ et d₃ sont mesurées par un granulomètre à diffraction de rayon laser. Les valeurs de d₉₇, d₉₀, d₅₀ et d₃ représentent respectivement le diamètre des agglomérats ou agrégats de particules tel que 97%, 90%, 50% et 3% respectivement sont de taille inférieure.

Pour la mesure des tailles des agrégats de particules, la charge minérale est préalablement soumise à des ultrasons durant 1 min.

Avantageusement, dans la charge minérale, les fractions molaires sont telles que le rapport (a + b + e)/(c + d) est compris dans la plage allant de 0,90 à 1,15, de préférence de 0,95 à 1,10.

La dolomie cuite permettant l'obtention de cette charge hydratée provient de la calcination d'une dolomie crue naturelle de formule yCaCO₃.zMgCO₃. Il est communément admis que les dolomies naturelles contiennent plus de 90 à 95 % en masse de dolomite, minéral de formule CaCO₃.MgCO₃, le reste de la composition étant dans la plupart des cas de la calcite et/ou des argiles. De ce fait, les dolomies naturelles ont généralement un rapport molaire Ca/Mg compris entre 0,8 et 1,2. Ce rapport molaire reste inchangé pendant les étapes de calcination et d'hydratation de la dolomie.

De préférence, la charge minérale comprend de 1 à 20 % en poids, de préférence moins de 18 % en poids, de manière plus préférentielle moins de 10 % en poids, de manière encore pus préférentielle moins de 8 % en poids et de manière encore plus préférentielle moins de 6 % en poids de CaCO₃ par rapport au poids total de ladite dolomie semi-hydratée.

Cette composante CaCO₃ provient d'une calcination incomplète de la dolomie crue avant hydratation. De manière préférentielle, elle contient entre 2 et 6 % en masse de CaCO₃. Ces valeurs sont déterminées d'après la perte de masse mesurée entre 600 et 900 °C sous air ou sous azote, qui correspond au départ du CO₂ pendant la décarbonatation de CaCO₃. Avantageusement, la charge minérale comprend moins de 15 % en poids, de préférence moins de 10 % en poids, de manière plus préférentielle moins de 5 % en poids, de manière encore plus préférentielle moins de 3%, en particulier moins de 2% de CaO par rapport au poids total de ladite dolomie semi-hydratée. Cette composante CaO est de la chaux vive résiduelle issue d'une hydratation incomplète de la partie calcique de la dolomie calcinée. De manière préférentielle, la charge ne contient pas de CaO résiduel.

la dolomie est semi-hydratée et contient au moins 1 % en poids de MgO.

La charge minérale contient dans une forme de réalisation avantageuse au moins 5 % en poids et de préférence au moins 10 %, avantageusement au moins 15 %, de façon préférentielle au moins 20 % en poids de MgO par rapport au poids total de ladite dolomie semi-hydratée et comprend de préférence moins de 41 %, en particulier moins de 30% en poids de MgO par rapport au poids total de ladite dolomie semi-hydratée.

Dans une forme de réalisation avantageuse la charge minérale comprend de 2 à 51 % en poids, de préférence de 3 à 40 % en poids, de manière préférentielle de 6 à 30 % en poids, de manière encore plus préférentielle de 8 à 25 % en poids de Mg(OH)₂ par rapport au poids total de ladite dolomie semi-hydratée. De manière avantageuse, la dolomie semi-hydratée contient de préférence 10 à 20 % en poids de Mg(OH)₂ par rapport au poids total de ladite dolomie semi-hydratée. Le rapport molaire d/c est supérieur à 1, de préférence au moins supérieur à 2, en particulier supérieur à 4.

Lorsque ces valeurs sont combinées aux valeurs de 1 à 20 % de CaCO₃ et de 0 à 15 % de CaO mentionnées précédemment, elles impliquent, toujours pour un rapport molaire Ca/Mg compris entre 0,8 et 1,2, que la proportion massique de Ca(OH)₂ dans la charge de la composition selon cette forme avantageuse de l'invention est comprise entre 15 et 69 %.

Dans une autre forme de réalisation avantageuse la charge minérale comprend de 30 à 65 % en poids, avantageusement de 40 à 60 %, de préférence de 45 à 55 % en poids de Ca(OH)₂ par rapport au poids total de ladite dolomie semi-hydratée.

Par ailleurs, en plus de CaCO₃ Ca(OH)₂, Mg(OH)₂, MgO et CaO, la charge minérale de la composition selon l'invention peut contenir les impuretés usuellement présentes dans les dolomies naturelles, à savoir des phases dérivées de SiO₂ Al₂O, Fe₂O₃, MnO, P₂O₅, K₂O et/ou SO₃, mais la somme de ces impuretés, exprimées sous la forme des oxydes précités, ne dépasse pas 5 %, de préférence 3 %, de préférence 2 % ou même 1% du poids de la dolomie semi-hydratée. En particulier, la charge de la composition selon l'invention contient avantageusement moins de 1,0 % en masse de Fe₂O₃ de préférence moins de 0,7 % et de préférence moins de 0,5 %, de façon à ne pas modifier significativement la couleur de la composition polymère ignifugée.

De manière particulièrement avantageuse, la charge minérale présente une surface spécifique, mesurée par manométrie d'adsorption d'azote et calculée selon la méthode BET, comprise entre 6 et 35 m²/g, de préférence entre 7 et 20 m²/g, de manière plus préférentielle entre 8 et 13 m²/g.

De préférence, la charge minérale est exempte d'halogènes ajoutés, ce qui signifie que ceux-ci sont à l'état de traces et en tout cas en teneur inférieure à 0,5 % en poids.

D'autres formes de réalisation de la charge minérale sont indiquées dans les revendications annexées.

La présente invention se rapporte à une composition polymère ignifugée comprenant une charge minérale et un polymère, ladite charge minérale étant incorporée à hauteur de 1 à 80 % en poids, avantageusement de 40 à 75 % en poids, dans la composition polymère ignifugée. Le polymère peut être de type thermoplastique, thermodurcissable ou élastomère, d'origine naturelle ou synthétique. Il peut être choisi par exemple parmi un polyéthylène, un polypropylène, un polystyrène, un copolymère d'éthylène et de propylène (EPR), un terpolymère-éthylène-propylènediène (EPDM), un copolymère d'éthylène et d'acétate de vinyle (EVA), un copolymère d'éthylène et d'acrylate de méthyle (EMA), un copolymère d'éthylène et d'acrylate d'éthyle (EEA), un copolymère d'éthylène et d'acrylate de butyle (EBA), un copolymère d'éthylène et d'octène, un polymère à base d'éthylène, un polymère à base de polypropylène, de polystyrène, un polymère halogéné, un silicone ou un quelconque mélange de ces composés. De manière avantageuse, la matrice polymère de la composition polymère de la présente invention comprend au moins un polymère du groupe ci-dessus.

En outre, la composition polymère selon la présente invention peut contenir les additifs habituellement utilisés dans les compositions polymères (antioxydants...).

En ce qui concerne l'effet retardateur de flamme évalué par la méthode du cône calorimètre, une composition ignifugée selon l'invention comprenant 1 à 80 % en poids de la charge retardatrice de flamme selon l'invention et le reste de matrice polymère, présente un caractère ignifuge au moins équivalent à celui du même polymère chargé avec la même quantité d'ATH ou de MDH. Par caractère ignifuge équivalent, on entend un temps d'ignition au moins aussi long et un maximum du HRR du même ordre de grandeur ou plus faible. Le temps d'ignition est le temps entre le début du chauffage de l'échantillon et son inflammation.

En ce qui concerne la résistance mécanique des polymères chargés avec la charge, l'élongation à la rupture est plus faible, le module d'Young plus élevé et la résilience plus faible en comparaison des valeurs obtenues pour le polymère hôte non chargé. Néanmoins, cet effet néfaste des charges minérales sur la résistance mécanique des polymères est connu et accepté.!

Une autre manière de qualifier l'effet retardateur de flamme de la charge est de comparer le maximum de la courbe HRR du polymère hôte non chargé avec le maximum de la courbe HRR du polymère chargé avec 40 à 75 % en poids de la charge de la composition selon l'invention. La charge de la composition selon l'invention permet ainsi de réduire le maximum de la courbe HRR du polymère hôte de 50 à 65 %, de préférence de 65 à 80 % et de préférence de 80 à 90 %.

La composition selon la présente invention est également utilisée pour améliorer la résistance au feu d'une formulation ou d'une pièce finie ou semi-finie selon un essai de tenue au feu (LOI, cone calorimetre, UL94,...), en particulier dans laquelle le maximum d'une courbe HRR dudit polymère est réduit de 65%, de préférence de 80 %.

Avantageusement, la composition polymère ignifugée selon la présente invention comprend en outre un agent de surface ou un agent de couplage tel qu'un silane ou un acide gras pour le traitement de surface de ladite charge minérale. Elle peut aussi contenir dans une réalisation particulière un agent de compatibilisation, comme un polyéthylène greffé avec de l'anhydride maléique par exemple.

Ladite dolomie semi-hydratée de la charge minérale peut-être traitée en surface par l'une ou l'autre méthode notamment divulguée dans WYPYCH G., Handbook of fillers, 3 ed 2010, Chemtec Publisher, ISBN 978-1-895198-41-6, au chapitre 6 « Chemical properties of fillers and filled materials » ; pp291 et suivantes et résumées au tableau 6.1 de cette référence. En particulier, ce traitement est effectué au moyen d'un agent de surface ou un agent de couplage comme par exemple un silane ou un acide gras.

Dans une variante selon la présente invention, ledit polymère est un polymère organique thermoplastique.

En outre, ladite charge minérale est avantageusement incorporée à raison de 50 à 60 % en poids par rapport au poids total de ladite composition polymère ignifugée.

Dans le cas de certaines matrices polymères, par exemple du polyéthylène, la dispersion de la charge dans la matrice polymère est rendue difficile par la charge de surface de la charge minérale de la composition selon l'invention, comme cela est aussi le cas pour l'ATH et le MDH. Comme pour l'ATH et le MDH, cette résistance mécanique de matrices apolaires du type polyéthylène chargées avec la charge peut être améliorée par un traitement de surface de la charge minérale par un agent de recouvrement ou un agent de couplage. Les techniques de compatibilisation charge/polymère par un traitement de surface sont connues, notamment celles ayant recours aux acides gras et celle ayant recours aux silanes. Dans le cas de certaines autres matrices polymères, par exemple l'EVA, la charge peut être utilisée telle quelle sans traitement de surface, tout en permettant à la composition de conserver des propriétés mécaniques du même ordre de grandeur que celles des compositions similaires à base d'ATH ou de MDH.

D'autres formes de réalisation de la composition polymère ignifugée suivant l'invention sont indiquées dans les revendications annexées.

Des procédés de fabrication de charges minérales sont connus de l'état de la technique.

Par exemple, le document US 5,422,092 décrit une charge à base d'un hydroxyde métallique composite de type solution solide et de formule générale Ca₁₋ₓM²⁺ₓ(OH)₂ où M est l'un au moins des métaux Mg, Mn, Fe, Co, Ni, Cu et Zn et où x est compris entre 0,001 et 0,995. Ces charges composites peuvent être obtenues par co-précipitation par ajout d'une base à une solution contenant des ions Ca²⁺ et M²⁺, par hydratation d'une solution solide de CaO et de MO, par réaction entre une suspension de Ca(OH)₂ et une solution aqueuse contenant des ions M²⁺ ou encore par voie sol-gel. Les produits obtenus sont soumis dans tous les cas à un traitement hydrothermal post-synthèse de 1 h en autoclave à 110-250 °C dans le but de favoriser la croissance cristalline et d'empêcher l'agrégation.

Le document EP 0541329 est très similaire au document US 5,422,092 décrit ci-dessus, mais ne divulgue que deux méthodes pour la fabrication de cette solution solide. Il s'agit soit d'une réaction entre une base et une solution contenant des ions Ca²⁺ et des ions M²⁺, soit d'une réaction entre une suspension de CaO ou Ca(OH)₂ et une solution aqueuse contenant des ions M²⁺.

On connait également la production à partir de dolomie de charges totalement hydratées de formule générale xCaCO₃.yCa(OH)₂.zM₉(OH)₂ contenant du CaO et/ou du MgO non hydratés uniquement à l'état de traces (moins de 1 % en poids), ou de formule simplifiée yCa(OH)₂.zMg(OH)₂, avec un rapport molaire y/z compris entre 0,8 et 1,2. Cette production est toutefois particulièrement complexe. En effet, une fois calcinée en CaO.MgO, la dolomie doit être hydratée. Or, la composante MgO des dolomies cuites est difficile à hydrater totalement. En effet, cette composante MgO est issue de la décarbonatation du MgCO₃ de la dolomie de départ. Cette décomposition se fait généralement entre 600 et 800 °C. La fraction CaCO₃ de la dolomie naturelle ne se décarbonatant qu'au-delà de 800 °C, l'obtention de dolomie calcinée CaO.MgO passe obligatoirement par un chauffage de la dolomie crue autour de 900 °C ou plus, c'est-à-dire bien au-delà de la température de décomposition de MgCO₃. Cela a pour résultat une surcuisson du MgO qui est soumis à des phénomènes de croissance granulaire et de frittage au-delà de sa température de décomposition, phénomènes qui réduisent sa porosité et sa réactivité vis-à-vis de l'eau.

Les méthodes traditionnelles utilisées pour favoriser l'hydratation de la composante MgO des dolomies cuites sont l'utilisation de larges excès d'eau, d'eau à haute température, voire de réacteurs travaillant sous pression et à hautes températures. Pour ces raisons, la dolomie totalement hydratée, de formule générale xCaCO₃.yCa(OH)₂.zMg(OH)₂ et contenant du CaO et/ou du MgO non hydratés uniquement à l'état de traces (moins de 1 % en poids) ou de formule simplifiée yCa(OH)₂.zMg(OH)₂, reste encore à l'heure actuelle un produit de spécialité.

Il existe un produit comparable, assimilé cette fois à un produit de commodité, à savoir la dolomie semi-hydratée. Ce produit peut-être décrit avec une formule simplifiée du type yCa(OH)₂.(z-n)Mg(OH)₂.nMgO, toujours avec un rapport molaire y/z compris entre 0,8 et 1,2, c'est-à-dire qu'il s'agit d'une dolomie dont la composante calcique peut généralement être considérée comme ayant été totalement hydratée, et la composante magnésienne seulement partiellement hydratée. Ce type de dolomie semi-hydratée est obtenu par un procédé très simple recourant à des hydrateurs à chaux classiques, très courants dans les usines des chaufourniers, et faisant appel aux mêmes mécanismes réactionnels que ceux connus dans le cas de l'extinction de la chaux vive.

Le procédé est caractérisé en ce qu'il comprend les étapes de
a) calcination d'une dolomie crue naturelle de formule sCaCO₃.tMgCO₃ avec obtention d'une dolomie calcinée de formule générale xCaCO₃.yCaO.zMgO, s,t,x, y et z étant des fractions molaires sous les conditions x+y=s et t=z et s/t compris entre 0,8 et 1,2,
b) une hydratation incomplète et contrôlée pendant une période de temps prédéterminée comprise entre 5 minutes et 4 heures de ladite dolomie calcinée de formule générale xCaCO₃.yCaO.zMg par une quantité prédéterminée d'une phase aqueuse, avec formation d'une charge minérale sous forme d'agglomérats d'agrégats de particules de formule générale aCaCO₃.bCa(OH)₂.cMg(OH)₂.dMgO.eCaO, a,b,c,d et e étant des fractions molaires avec a=x, b+e=y, c+d=z et (a + b + e)/(c + d) étant compris entre 0,8 et 1,2 et présentant des valeurs telles que b représente la fraction molaire correspondant à une proportion en poids ≥ 15 %, c représente la fraction molaire correspondant à une proportion en poids ≥ 1 %, d représente la fraction molaire correspondant à une proportion en poids ≥ 1 %, a et e représentant respectivement des fractions molaires correspondant à des proportions en poids ≥ 0 %, lesdites proportions en poids étant données par rapport au poids total de ladite dolomie semi-hydratée,

Dans une forme avantageuse, le procédé comprend en outre une coupure granulométrique et/ou un broyage desdits agglomérats d'agrégats de particules à 150 µm, de manière à ne garder que la fraction granulométrique des agglomérats d'agrégats de particules présentant un d₉₇ < 150 µm.

Selon les propriétés de la source de dolomie naturelle et les conditions opératoires de la calcination et de l'hydratation de cette dolomie, la dolomie semi-hydratée de manière contrôlée peut présenter un taux d'hydratation de MgO en Mg(OH)₂ variable, une granulométrie et une composition chimique variables. C'est donc en contrôlant particulièrement les conditions d'hydratation et de calcination que le procédé permet d'atteindre une charge minérale sous forme d' agglomérats d'agrégats de particules tels que définis précédemment, de formule générale aCaCO₃.bCa(OH)₂.cMg(OH)₂.dMgO.eCaO, a, b, c, d et e étant des fractions molaires avec (a + b + e)/(c + d) étant compris entre 0,8 et 1,2 et présentant des valeurs telles que de b représente la fraction molaire correspondant à une proportion en poids ≥ 15 %, c représente la fraction molaire correspondant à une proportion en poids ≥ 1 %, d représente la fraction molaire correspondant à une proportion en poids ≥ 1 %, a et e représentant respectivement des fractions molaires correspondant à des proportions en poids ≥ 0 %, lesdites proportions en poids étant données par rapport au poids total de ladite dolomie semi-hydratée.

Dans une forme particulière de réalisation du procédé, ladite hydratation incomplète est réalisée par voie sèche en ajoutant à une unité de masse de ladite dolomie calcinée ladite quantité prédéterminée de phase aqueuse comprise entre 0,2 et 0,8 unité de masse, de préférence de 0,4 à 0,6 unité de masse. Dans cette forme particulière de réalisation du procédé, la charge minérale de formule générale aCaCO₃.bCa(OH)₂.cMg(OH)₂.dMgO.eCaO est obtenue sous forme d'agglomérats d'agrégats de particules et/ou sous forme d'agrégats de particules sous forme pulvérulente.

Dans une variante avantageuse, dans laquelle ladite hydratation incomplète est réalisée par voie humide en ajoutant à une unité de masse de ladite dolomie calcinée ladite quantité prédéterminée de phase aqueuse comprise entre 2 et 10 unités de masse, de préférence de 3 à 5 unités de masse, plus particulièrement, 4 unités de masse.

Dans cette forme de réalisation particulière, ladite charge minérale de formule générale aCaCO₃.bCa(OH)₂.cMg(OH)₂.dMgO.eCaO sous forme d'agglomérats d'agrégats de particules et/ou d'agrégats de particules est obtenue sous la forme d'une suspension. Dans ce cas, la charge peut s'obtenir sous forme pulvérulente par une étape ultérieure de séparation et de séchage, éventuellement suivie d'une coupure granulométrique et/ou d'un broyage.

Dans une forme particulière de réalisation du procédé, ladite hydratation incomplète est réalisée par voie quasi-sèche en ajoutant à une unité de masse de ladite dolomie calcinée ladite quantité prédéterminée de phase aqueuse comprise entre 0,9 et 1,9 unités de masse, de préférence de 1,2 à 1,5 unités de masse. Dans cette forme particulière de réalisation du procédé la charge minérale de formule générale aCaCO₃.bCa(OH)₂.cMg(OH)₂.dMgO.eCaO est obtenue sous forme d'agglomérats d'agrégats de particules de forte humidité et/ou sous forme de pâte. Dans ce cas, la charge peut s'obtenir sous forme pulvérulente par une étape ultérieure de séparation et de séchage, éventuellement suivie d'une coupure granulométrique et/ou d'un broyage.Dans une variante, la phase aqueuse est de l'eau.

La présente invention se rapporte également à un procédé de fabrication d'une composition polymère ignifugée selon la présente invention qui comprend une étape de mélange de ladite charge minérale ignifuge ou ignifugeante avec un polymère organique ou un mélange de polymères organiques. Dans ce procédé, la composition polymère ignifugée peut être obtenue par le procédé selon l'invention, directement après la production de la charge minérale ou plus tard, par exemple après acquisition de la charge minérale par un intermédiaire qui se la serait procurée auprès des demandeurs.

Les méthodes classiques d'incorporation de charges minérales dans une matrice polymère peuvent être utilisées, par exemple le mélange dans un mélangeur de laboratoire ou l'extrusion avec différents types d'équipement bien connus de l'homme de l'art comme l'extrudeuse monovis, l'extrudeuse bivis, le co-malaxeur (Buss), le mélangeur à chambre interne ou encore le malaxeur à rouleaux.

D'autres formes de réalisation du procédé selon la présente invention sont mentionnées dans les revendications annexées.

La présente invention se rapporte également à une utilisation d'une charge minérale telle que décrite ci-dessus. Plus particulièrement, la présente invention se rapporte à une utilisation de dolomie semi-hydratée répondant à la formule aCaCO₃.bCa(OH)₂.cMg(OH)₂.dMgO.eCaO (a, b, c, d et e étant des fractions molaires avec (a + b + e)/(c + d) étant compris entre 0,8 et 1,2 et présentant des valeurs telles que b représente la fraction molaire correspondant à une proportion en poids ≥ 15 %, c représente la fraction molaire correspondant à une proportion en poids ≥ 1 %, d représente la fraction molaire correspondant à une proportion en poids ≥ 1 %, a et e représentant respectivement des fractions molaires correspondant à des proportions en poids ≥ 0 %, lesdites proportions en poids étant données par rapport au poids total de ladite dolomie semi-hydratée) comme agent retardateur de flamme dans une composition polymère ignifugée.

Ces compositions ignifugées comprenant la charge ignifuge ou ignifugeante minérale présentent donc, comme susdit, un avantage non négligeable en comparaison des compositions à base d'ATH ou de MDH en ce que le résidu de combustion recueilli à l'issue de la combustion du polymère est cohésif et peut même être qualifié de céramisé sans avoir recours à des formulations complexes contenant de l'ATH ou du MDH en tant que charge retardatrice de flamme, associé avec des nanoparticules ou du borate de Zn en tant qu'agent céramisant. Ces agents céramisants sont couteux, difficiles à incorporer au polymère et présentent pour nombre d'entre eux un profil écotoxique défavorable qui en limite l'usage et rend nécessaire la recherche de substituts.

De préférence, dans l'utilisation selon l'invention, ladite composition polymère ignifugée comprend un polymère organique en particulier un polymère organique thermoplastique.

Dans une variante de l'utilisation selon l'invention, ledit polymère organique est un polymère organique thermoplastique apolaire, de préférence de type polyéthylénique, à hauteur de 20 à 99 %, avantageusement de 40 à 60 % en poids, de préférence, à hauteur d'environ 50 % en poids, par rapport au poids total de ladite composition polymère ignifugée et dans laquelle ladite charge minérale est comprise entre 1 et 80 %, avantageusement 40 et à 60 % en poids, par rapport au poids total de ladite composition polymère ignifugée.

Dans une autre variante de l'utilisation selon l'invention, ledit polymère organique est un polymère organique thermoplastique polaire, de préférence de type polyoléfine, en particulier, de type éthylène-acétate de vinyle (EVA), à hauteur de 20 à 99 %, avantageusement de 25 à 60% en poids, par rapport au poids total de ladite composition polymère ignifugée et dans laquelle ladite charge minérale est comprise entre 1 et 80 %, avantageusement 40 et 75 % en poids, par rapport au poids total de ladite composition polymère ignifugée.

Dans une autre variante de l'utilisation selon l'invention, ledit polymère organique est un mélange d'un polymère organique thermoplastique apolaire, de préférence de type polyéthylénique et d'un polymère organique thermoplastique polaire, de préférence de type polyoléfine, en particulier, de type éthylène-acétate de vinyle (EVA), la proportion totale de ces polymères étant à hauteur de 20 à 99 %, avantageusement de 25 à 60% en poids, par rapport au poids total de ladite composition polymère ignifugée et dans laquelle ladite charge minérale est comprise entre 1 et 80 %, avantageusement 40 et 75 % en poids, par rapport au poids total de ladite composition polymère ignifugée.

Dans le cas particulier des matrices polymères à base d'acétate, il y a formation d'acide acétique lors de la décomposition du polymère. Mg(OH)₂ étant soluble dans l'acide acétique alors que MgO ne l'est pas, la dolomie semi-hydratée présente un avantage en comparaison d'un MDH seul ou d'une dolomie totalement hydratée de formule simplifiée yCa(OH)₂.zMg(OH)₂ telle que décrite ci-dessus. En effet, lorsque Mg(OH)₂ se solubilise, il perd son effet retardateur de flamme et principalement son effet barrière. Cet avantage de la dolomie semi-hydratée, et plus exactement de la présence dans la charge de MgO résiduel, vis-à-vis du MDH et des composés totalement hydratés de type yCa(OH)₂.zMg(OH)₂, est d'autant plus marqué que la proportion d'acétate dans la matrice polymère est élevée.

Un autre avantage de la dolomie semi-hydratée par rapport à la dolomie totalement hydratée ou à du MDH, lié à la présence de MgO, est l'effet suppresseur de fumées (smoke suppressant en anglais). En effet, MgO favorise l'oxydation des gaz de combustion, modifie l'équilibre CO/CO₂ et conduit de ce fait à une quantité de fumées dégagées réduite.

Il est entendu que la charge minérale peut être utilisée comme retardateur de flamme en combinaison avec les charges classiques du type ATH ou MDH.

D'autres formes de réalisations de l'utilisation selon l'invention sont mentionnées dans les revendications annexées.

D'autres caractéristiques, détails et avantages de l'invention ressortiront de la description donnée ci-après, à titre non limitatif et en faisant référence aux exemples et aux figures.

La figure 1 est un graphique représentant les résultats des tests au feu par cône calorimètre des exemples 1 à 3.

Les figures 2A et 2B montrent le résidu de combustion obtenu à l'issue du test au feu par cône calorimétrie pour la composition de l'exemple 2.

La figure 3 est un graphique représentant les résultats des tests au feu par cône calorimètre de l'exemple 4.

La figure 4 est un graphique représentant les résultats des tests au feu par cône calorimétrie des exemples 6 et 7.

La figure 5 est un graphique représentant les résultats des tests au feu par cône calorimétrie de l'exemple 9.

La figure 6 montre le résidu de combustion obtenu à l'issue du test au feu par cône calorimétrie pour la composition de l'exemple 9.

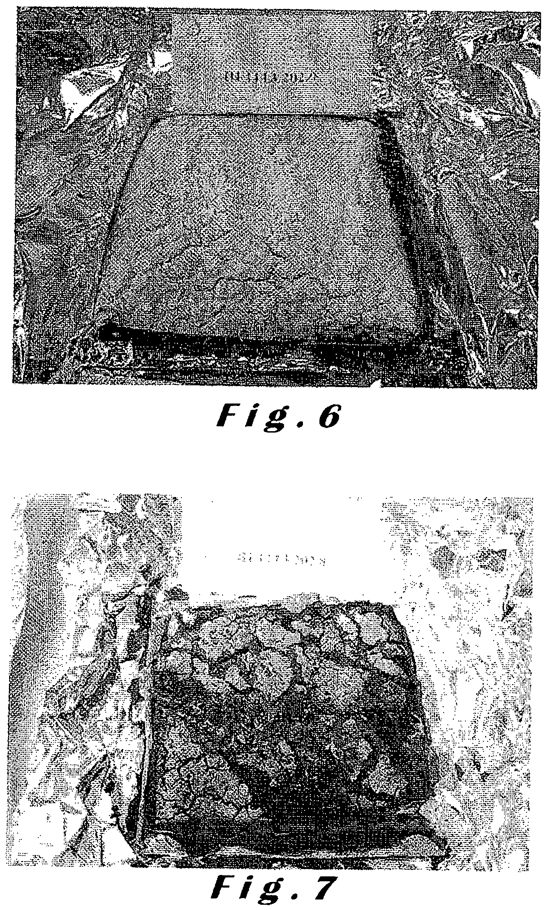

A titre de comparaison, la figure 7 montre le résidu de combustion obtenu à l'issue du test au feu par cône calorimétrie d'une composition similaire à celle de l'exemple 9 dans laquelle la dolomie semi-hydratée n°4 selon l'invention a été remplacée pardu MDH (Magnifin H10), selon l'art antérieur.

La présente invention se rapporte donc à une composition polymère ignifugée comprenant une charge minérale ignifuge ou ignifugeante comprenant un composé calcique et un composé magnésien, à son procédé d'obtention et à l'utilisation de ladite charge minérale. La charge minérale est sous forme pulvérulente et comprend un composé calcique et un composé magnésien, sous la forme d'une dolomie semi-hydratée, c'est-à-dire un composé unique répondant à la formule générale aCaCO₃.bCa(OH)₂.cMg(OH)₂.dMgO.eCaO, a,b,c,d et e étant des fractions molaires avec (a + b + e)/(c + d) étant compris entre 0,8 et 1,2 et présentant des valeurs telles que de b représente la fraction molaire correspondant à une proportion en poids ≥ 15 %, c représente la fraction molaire correspondant à une proportion en poids ≥ 1 %, d représente la fraction molaire correspondant à une proportion en poids ≥ 1 %, a et e représentant respectivement des fractions molaires correspondant à des proportions en poids ≥ 0 %, lesdites proportions en poids étant données par rapport au poids total de ladite dolomie semi-hydratée.

La distribution en taille de la charge minérale de la composition selon l'invention est déterminée par granulométrie laser. Pour cette mesure, 3 g de la charge minérale sont dispersés dans 80 cm³ de méthanol sous agitation magnétique puis quelques gouttes de cette suspension sont prélevées et introduites dans la cellule de mesure du granulomètre laser (Beckman Coulter LS 13 320 muni d'un dispositif PIDS (Polarization Intensity Differential Scattering) pour la mesure des éléments submicroniques). Les éléments dont la taille est comprise entre 0,04 et 2000 µm sont mesurés. Les résultats sont exprimés sous la forme de percentiles notés dₓ, représentant le diamètre d en µm en dessous duquel se trouve x % des particules mesurées. Nous utilisons d₉₇, d₉₀, d₅₀ et d₃.

Dans un premier temps, la distribution en taille de la charge minérale est mesurée directement après la mise en suspension de la poudre dans le méthanol. Cette méthode donne donc des indications sur la taille des agglomérats d'agrégats de particules de la charge minérale de la composition selon l'invention. Avec cette méthode de mesure, lesdits agglomérats ont un d₉₇ inférieur à 150 µm, de préférence à 100 µm, de préférence à 80 µm, de préférence à 50 µm ; un d₉₀ inférieur à 30 µm, de préférence à 20 µm et de préférence à 15 µm voire à 10 µm, un d₅₀ inférieur à 8 µm, de préférence à 5 µm, de préférence à 4 µm et un d₃ supérieur à 0,4 µm, de préférence à 0,5 µm.

Une seconde méthode a permis de s'approcher d'avantage de la taille des particules individuelles et/ou agrégats de celles-ci en s'affranchissant des problèmes d'agglomération. Cette fois, la suspension de poudre minérale dans le méthanol est soumise à un traitement de désagglomération sous ultrasons avant la mesure de granulométrie laser. La désagglomération se fait à l'aide d'une sonde à ultrasons Sonics VC750 avec une puissance de 750 W pendant 1 min. Cette fois, le d₉₇ des particules ou agrégats de particules de la charge minérale est inférieur à 30 µm, de préférence à 20 µm, de manière particulière à 15 µm et de préférence à 10 µm, leur d₉₀ est inférieur à 15 µm, de préférence à 10 µm, de préférence à 7 µm et de manière préférentielle à 5 µm, leur d₅₀ est inférieur à 5 µm, de préférence à 4 µm et de préférence à 3 µm et leur d₃ est supérieur à 0,3 µm, de préférence à 0,4 µm.

Des charges ayant de telles propriétés de distribution en taille de particules peuvent être obtenues directement lors de la réaction d'hydratation de la dolomie, mais de manière avantageuse elles sont obtenues par une séparation granulométrique de la dolomie semi-hydratée (tamisage ou séparation à l'air), voire par un broyage de la dolomie semi-hydratée (broyage à jet d'air par exemple).

La présente charge minérale comprend donc des agglomérats d'agrégats de particules dont la taille est essentiellement comprise entre les valeurs de d₃ et d₉₇, soit entre 0,4 et 150 µm, de préférence entre 0,5 et 100 µm, de préférence entre 0,5 et 80 µm et de manière plus préférentielle entre 0,5 et 50 µm.

### EXEMPLES

### Exemple 1.-

Utilisation en tant que charge retardatrice de flamme d'une dolomie semi-hydratée n°1 obtenue industriellement par calcination et hydratation (extinction) d'une dolomie naturelle en voie sèche dans un hydrateur industriel classique. La dolomie issue de l'hydrateur est ensuite séparée par différentes étapes de séparation à l'air afin d'obtenir un premier grade granulométrique, noté grade A Les propriétés de cette dolomie semi-hydratée n°1 de grade A sont regroupées dans le Tabeau 1.

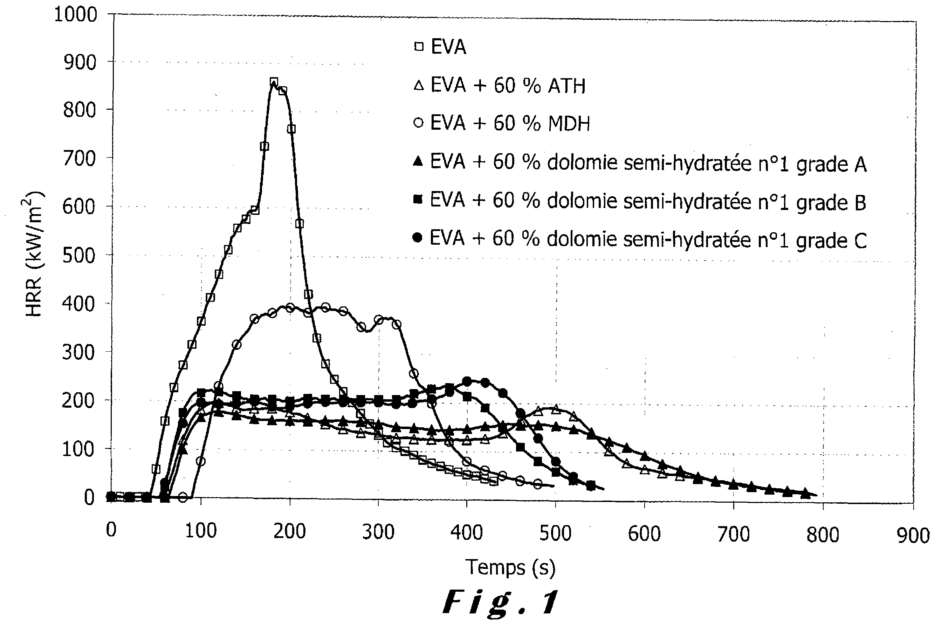

Cette charge est incorporée à hauteur de 60 % en masse dans une matrice co-polymère d'éthylène et d'acétate de vinyle contenant 28 % d'acétate de vinyle (EVA, Escorene UL328, produit par ExxonMobil Chemical). Le mélange entre la matrice polymère et la charge minérale est réalisé à l'aide d'une extrudeuse bi-vis. Des échantillons de polymère chargé mesurant 100 x 100 x 4 mm³ sont ensuite préparés à partir de ce mélange à l'aide d'une presse à injecter. Ces échantillons sont soumis aux tests mécaniques (élongation à la rupture et résistance à l'impact) et au feu par cône calorimètre. Les résultats sont comparés à ceux obtenus pour le polymère hôte non chargé et pour le même polymère, chargé dans les mêmes conditions et avec les mêmes proportions d'ATH (Albemarle Martinal OL 107 LEO) et de MDH (Albemarle Magnifin H10). Les résultats de résistance mécanique sont présentés dans le Tableau 2. Les résultats des tests au feu par cône calorimètre sont représentés à la Figure 1.

De manière générale, l'ajout de charges minérales dans une matrice polymère affaiblit significativement les propriétés mécaniques de cette dernière (diminution de l'élongation à la rupture et de la résilience).

En ce qui concerne la résistance mécanique (Tableau 2) de l'EVA chargé avec 60 % de la charge considérée dans cet exemple (dolomie semi-hydratée n°1 grade A), si l'élongation à la rupture est plus faible que celle mesurée dans le cas de l'EVA chargé avec les charges de référence ATH et MDH, la résilience est en revanche comparable. L'élongation à la rupture étant supérieure à 40 %, cette composition d'EVA selon l'invention reste adaptée pour une utilisation dans la plupart des applications envisagées (notamment pour la fabrication de certains câbles).

Pour ce qui est de l'effet retardateur de flamme, la Figure 1 montre clairement que l'incorporation de 60 % de la charge selon l'invention dans la matrice d'EVA diminue nettement l'énergie libérée pendant la combustion du polymère (le maximum de la courbe HRR est nettement plus faible en comparaison de l'EVA non chargé). Cette diminution est comparable à celle mesurée pour la composition d'EVA contenant de l'ATH. Elle est par ailleurs plus marquée que celle mesurée pour la composition d'EVA contenant du MDH. D'autre part, la libération de chaleur est étalée dans le temps ce qui permet d'éviter les points chauds qui sont à l'origine de la propagation du feu d'une pièce à l'autre.

Comme expliqué ci-dessus, l'avantage de la charge par rapport au MDH proviendrait de la présence de MgO non hydraté dans la charge minérale de la composition selon l'invention. Dans le cas de la dolomie semi-hydratée, si la fraction de Mg(OH)₂ est affectée par l'acide acétique, la fraction de MgO, non soluble dans l'acide acétique, reste efficace, notamment pour la formation d'une couche protectrice de charbonnement.

Enfin, le départ de la combustion (temps d'ignition) est retardé en comparaison du polymère non chargé et le retard observé est comparable à celui obtenu avec la composition d'EVA contenant de l'ATH.

### Exemple 2.-

Utilisation en tant que charge retardatrice de flamme d'une dolomie de même origine que celle utilisée dans l'exemple 1 (dolomie semi-hydratée n°1), mais cette fois, la granulométrie de la dolomie issue de l'hydrateur a été contrôlée par différentes étapes de séparation à l'air afin d'obtenir un deuxième grade granulométrique, noté grade B, plus fin que le grade A de l'exemple 1. Les propriétés de cette dolomie semi-hydratée n°11 de grade B sont elles aussi regroupées dans le Tableau 1.

Comme dans l'exemple 1, cette charge est incorporée dans de l'EVA, dans les mêmes proportions et avec les mêmes conditions expérimentales. Les résultats de résistance mécanique sont présentés dans le Tableau 2 ci-dessous. Les résultats des tests au feu sont représentés à la Figure1.

Le Tableau 2 indique que la diminution de la taille des particules en comparaison du grade A décrit dans l'exemple 1 permet d'améliorer la résistance mécanique de la composition (augmentation à la fois de l'élongation à la rupture et de la résilience). Par ailleurs, si l'élongation à la rupture pour cet exemple 2, reste inférieure à celle mesurée pour les compositions à base d'ATH et de MDH, la résilience est en revanche plus élevée pour la charge selon cet exemple 2 que pour les compositions contenant ces charges de référence ATH et MDH.

Pour ce qui est de l'effet retardateur de flamme (Figure 1), la courbe représentant la libération de chaleur pendant la combustion de la composition en fonction du temps reste nettement inférieure à celle de l'EVA non chargé ou contenant du MDH. En revanche, elle est cette fois légèrement plus élevée que celle correspondant à la composition contenant l'ATH ou à la composition de l'exemple 1. Cette différence est probablement due à la plus grande réactivité du Mg(OH)₂ de la dolomie semi-hydratée de grade B en comparaison de celle de grade A du fait de la plus grande finesse des particules de Mg(OH)₂. Le Mg(OH)₂ est alors plus facilement dégradé par l'acide acétique dégagé pendant la combustion de l'EVA. Toutefois, l'effet retardateur de la charge du présent exemple est satisfaisant.

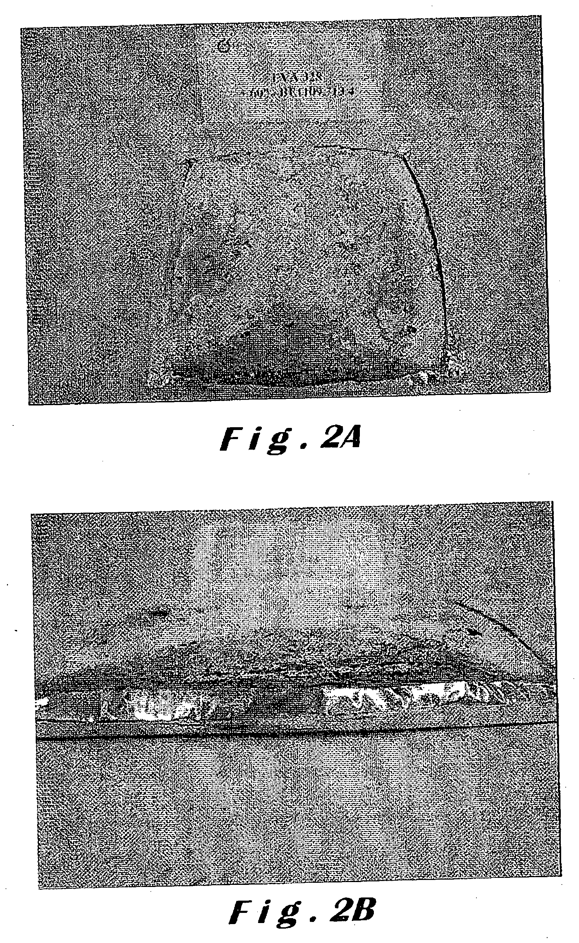

L'observation des résidus de combustion obtenus à l'issue du test au cône calorimètre, montrés aux Figures 2A et 2B, permet de dire qu'à l'issue de sa combustion, la composition de cet exemple a mené à la formation d'un résidu qui est cohésif en comparaison des résidus obtenus pour les compositions à base du même EVA et de MDH ou d'ATH, dont les résidus s'apparentent à une poudre ou à une cendre. Le résidu se présente en effet sous la forme d'une couche unique et non fissurée, pas même en surface qui a globalement la même forme que l'échantillon avant combustion, malgré toutefois un gonflement qui a eu lieu pendant la combustion de la composition. Ce résidu présente une certaine solidité, en particulier une résistance mécanique en compression élevée (de l'ordre de 200 kPa lors d'un test d'écrasement non décrit ici)

### Exemple 3.-

Utilisation en tant que charge retardatrice de flamme d'une dolomie de même origine que celle utilisée dans les exemples 1 et 2 (dolomie semi-hydratée n°1), mais cette fois, la ddomie issue de l'hydrateur est ensuite séparée par une séparation à l'air afin de couper la courbe granulométrique des agglomérats à 80 µm, puis la fraction < 80 µm ainsi obtenue est broyée dans un broyeur à jet d'air afin d'obtenir un troisième grade granulométrique, noté grade C, encore plus fin que le grade B décrit dans l'exemple 2. Les propriétés de cette dolomie semi-hydratée n°1 de grade C sont regroupées dans le Tableau 1.

Comme dans l'exemple 1, cette charge est incorporée dans de l'EVA, dans les mêmes proportions et avec les mêmes conditions expérimentales. Les résultats de résistance mécanique sont présentés au Tableau 2 ci-dessous. Les résultats des tests de l'effet retardateur de flamme, sont représentés à la Figure1. Ces résultats sont similaires à ceux obtenus pour la composition de l'exemple 2.

### Exemple 4.-

La charge minérale utilisée dans la composition de cet exemple est la même que celle décrite dans l'exemple 2.

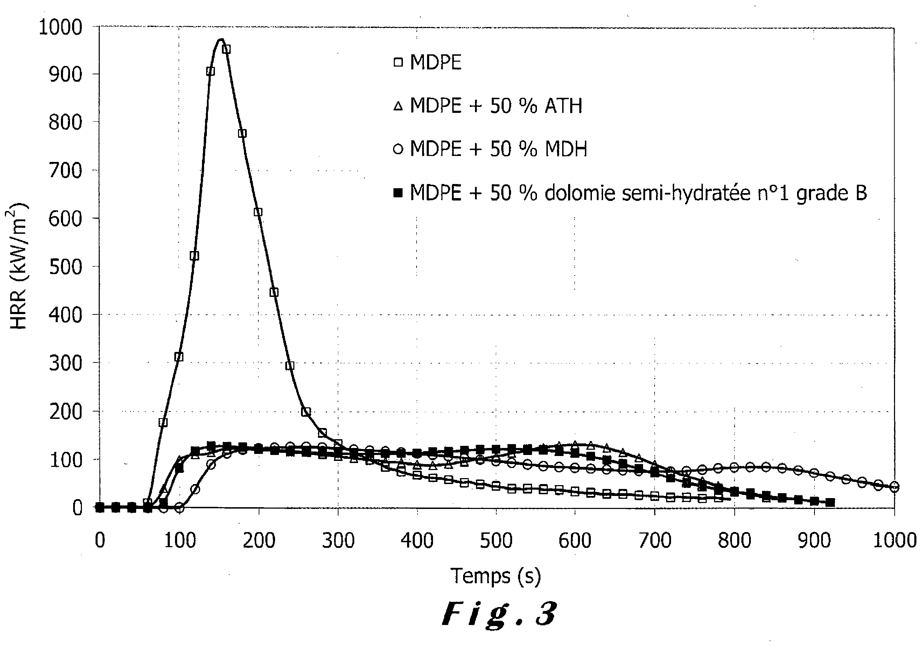

Cette fois, cette charge est incorporée à hauteur de 50 % en poids dans une matrice de polyéthylène de moyenne densité (MDPE 3802, grade pour câble produit par Total) en utilisant un mélangeur de type Brabender. Des plaques, préparées avec une presse hydraulique, mesurant 100 x 100 x 4 mm³ ont été ensuite testées au feu (cône calorimétrie) et des éprouvettes, découpées à partir de plaques de 3mm d'épaisseur ont été soumises aux tests mécaniques (élongation à la rupture et résistance à l'impact). Les résultats obtenus pour la composition selon l'invention sont comparés aux résultats obtenus pour le polymère hôte non chargé et pour le même polymère chargé dans les mêmes conditions et avec les mêmes proportions d'ATH et de MDH. Les résultats de résistance mécanique sont présentés dans le Tableau 2. Les résultats des tests au feu par cône calorimètre sont représentés à la Figure 3.

L'utilisation de dolomie semi-hydratée dans le MDPE diminue très nettement le dégagement de chaleur pendant la combustion en comparaison du MDPE non chargé (Figure 3). Tant les résultats mécaniques que l'effet retardateur de flamme mesurés avec cette composition selon l'invention sont similaires à ceux mesurés pour la composition de MDPE et d'ATH. L'énergie dégagée (HRR) avec la composition de cet exemple selon l'invention est analogue à celle de la composition MDPE et MDH. Ce dégagement de chaleur est très étalé dans le temps et la combustion est retardée par rapport au polymère non chargé.

### Exemple 5.-

La composition de cet exemple est similaire à celle de l'exemple 4 (MDPE chargé avec 50 % de dolomie semi-hydratée n°1 de grade B), si ce n'est que la charge minérale est traitée en surface avec 4 % de stéarate de calcium avant d'être incorporée dans la matrice polymère. Ce traitement de surface est effectué en introduisant sous agitation dans un mélangeur de type Lôdige M20 préalablement chauffé à 60 °C, 2 kg d'un mélange de dolomie semi-hydratée n°1 de grade B et de stéarate de calcium solide en poudre (4 % par rapport à la masse de dolomie). La température est ensuite montée à 200 °C (il faut 17 minutes environ pour passer de 60 à 200 °C). Lorsque celle-ci s'est stablisée, le mélange reste pendant 10 minutes à cette température sous agitation avant d'être refroidi et sorti du mélangeur.

Les résultats mécaniques correspondant à cette composition sont regroupés dans le Tableau 2. Le traitement de surface de la dolomie semi-hydratée n°1 de grade B avec 4 % de stéarate de calcium permet d'améliorer les propriétés mécaniques de la composition de MDPE.

### Exemple 6.-

Utilisation en tant que charge retardatrice de flamme d'une dolomie semi-hydratée n°2 obtenue industriellement par calcination et hydratation d'une dolomie naturelle. Cette dolomie naturelle est issue d'un autre gisement que la dolomie naturelle utilisée dans les exemples 1 à 5 pour l'obtention de la dolomie semi-hydratée n°1 de grade A, B et C. En revanche, les procédés de calcination et d'hydratation permettant de passer de la dolomie naturelle à la dolomie semi-hydratée sont comparables. A nouveau, l'hydratation est réalisée en voie sèche dans un hydrateur classique. La granulométrie de la dolomie issue de l'hydrateur est ensuite contrôlée par différentes étapes de séparation à l'air afin d'obtenir un grade granulométrique adapté à l'utilisation de cette dolomie semi-hydratée en tant que charge retardatrice de flamme. Les principales propriétés de cette dolomie semi-hydratée n°2 sont reprises dans le Tableau 3.

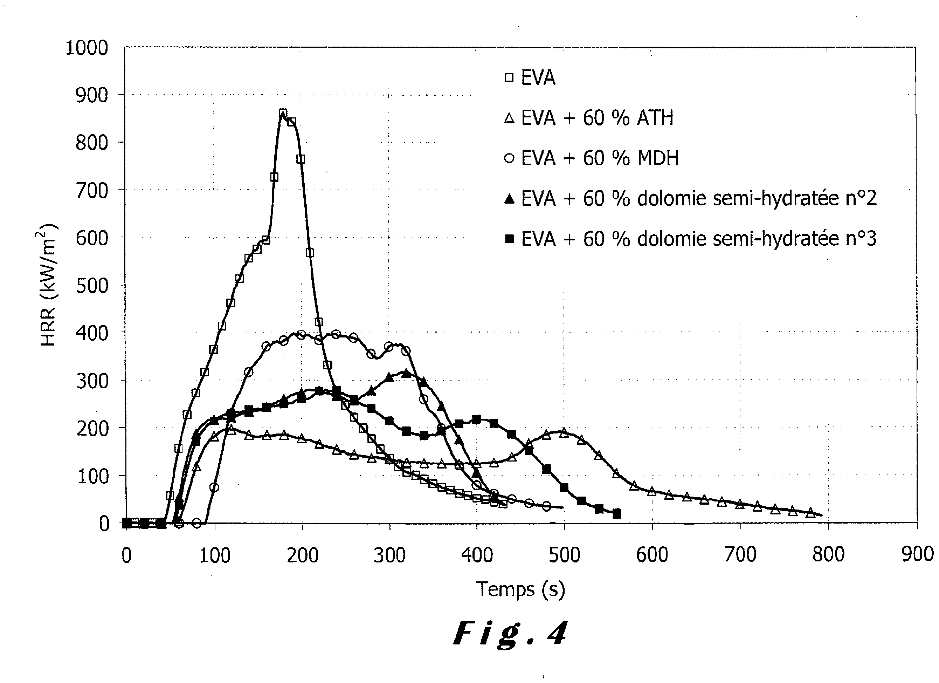

De manière similaire à celle décrite dans les exemples 1 à 3, cette charge est incorporée à hauteur de 60 % en masse dans la matrice d'EVA. Cet échantillon est soumis au test au feu (cône calorimétrie). Les résultats obtenus pour la composition selon l'invention sont comparés à la Figure 4 aux résultats obtenus pour le polymère hôte non chargé et pour le même polymère chargé dans les mêmes conditions et avec les mêmes proportions d'ATH et de MDH. L'utilisation de la dolomie semi-hydratée n°2 dans l'EVA (Figure 4) diminue très nettement le dégagement de chaleur pendant la combustion en comparaison de l'EVA non chargé.

### Exemple 7.-

Utilisation en tant que charge retardatrice de flamme d'une dolomie semi-hydratée n°3 obtenue par hydratation *en laboratoire* d'une dolomie cuite issue d'une calcination en conditions classiques dans un four industriel. La dolomie naturelle, à partir de laquelle la dolomie cuite puis la dolomie semi-hydratée n°3 sont obtenues, provient du même gisement que la dolomie naturelle utilisée pour la production de la dolomie semi-hydratée n°11 de grade A, B ou C utilisée dans les exemples 1 à 5. Le four utilisé pour la calcination de cette dolomie est également identique, mais cette fois, contrairement aux exemples 1 à 5, l'hydratation ne se fait plus industriellement dans un hydrateur en voie sèche classique, mais en voie humide au laboratoire en ajoutant 200 g de dolomie cuite dans 670 g d'eau déminéralisée à 40 °C sous agitation dans un récipient isotherme et en poursuivant la réaction d'hydratation jusqu'à ce que la température de la suspension se stabilise à 55 °C (à ± 0,5 °C). A l'isue de l'hydratation, la dolomie semi-hydratée est filtrée sur Büchner puis séchée pendant 1 nuit à 150 °C avant d'être grossièrement désagglomérée pus finement broyée. Les principales propriétés de la dolomie semi-hydratée n°3 se trouvent dans le Tableau 3.

Cette dolomie semi-hydratée n°3 est ensuite incorporée dans la matrice d'EVA selon le mode opératoire décrit dans l'exemple 1. L'effet retardateur de flamme de cette composition est illustréà la Figure 4.

L'utilisation de la dolomie semi-hydratée n°3 dans l'EVA (Figure 4) diminue très nettement le dégagement de chaleur pendant la combustion en comparaison de l'EVA non chargé.

### Exemple 8 - LOI

Des éprouvettes correspondant aux compositions des exemples 1 et 2 (EVA + 60 % en poids de la dolomie n ° 1 de grade A et de grade B respectivement) ont été préparées puis coupées avec une emboutisseuse à la forme nécessaire à la mesure de LOI. Le LOI a été mesuré selon la norme ASTM D2863 et les valeurs obtenues sont présentées au Tableau 4.

Le taux d'oxygène étant de 21 % dans l'atmosphère, ce résultat montre que le polymère de référence, qui possède un LOI de 21 %, est « combustible ». En revanche, la formulation selon l'invention possède un LOI supérieur à 21 % et devient donc « auto-extinguible ».

### Exemple 9.-

Utilisation d'une dolomie semi-hydratée n°4 lors de la préparation à une échelle pilote d'une composition polymère ignifugée.

La dolomie semi-hydratée utilisée en tant que charge dans cet exemple est un produit industriel comparable à la dolomie semi-hydratée de grade B utilisée dans la composition de l'exemple 2 et décrite dans le Tableau 1. Néanmoins, pour cet exemple, une quantité nettement plus importante de cette dolomie (environ 800 kg) a été prélevée sur le site de production, puis sa granulométrie a été contrôlée par une étape de séparation à l'air afin d'obtenir un grade granulométrique fin équivalent au grade B de l'exemple 2. Les principales caractéristiques de cette dolomie, moyennées sur plusieurs prélèvements, sont données dans le Tableau 5.

Cette dolomie semi-hydratée n°4 a été incorporée à hauteur de 60 % en masse dans une composition polymère décrite dans le Tableau 6. Les différents polymères (Exact 8203, Alcudia PA440, Fusabond E226 et Antioxydant AO25) ont dans un premier temps été mélangés dans des proportions adaptées à la formulation du Tableau 6. Ce mélange de polymère a ensuite été placé dans une trémie doseuse. La dolomie semi-hydratée n° 4 a quant à elle été introduite dans une seconde trémie doseuse. Ces deux trémies ont été raccordées sur les entrées d'un co-malaxeur (type Buss) équipé d'une vis de 47 mm de diamètre et présentant un rapport longueur / diamètre de la vis de 11. Le débit de production a été fixé à 15 kg / heure). La température moyenne sur la longueur du co-malaxeur est de l'ordre de 160 °C environ, plus ou moins élevée dans les différentes zones d'alimentation / mélange / transport qui se succèdent sur la longueur de la vis. A la sortie du co-malaxeur, le produit arrive dans une monovis qui le transporte jusqu'à une filière, au niveau de laquelle la matière est poussée au travers de 6 trous d'environ 3 mm de diamètre chacun. Un couteau tourne en continu à proximité de ces trous pour couper les fils de 3 mm de diamètre de diamètre en granulés cylindriques de 3 mm de diamètre et 3 mm de hauteur approximativement. La zone d'extrusion / granulation est continuellement refroidie par de l'eau. Les granulés sont ensuite séparés de l'eau de refroidissement puis séchés pendant environ 1 h à 50 °C.

Dans un second temps, les granulés ainsi préparés ont été extrudés pour former une bande d'environ 10 cm de largeur sur 2 mm d'épaisseur à l'aide d'une extrudeuse monovis à 160 °C.

5 éprouvettes ont été découpées dans cette bande afin de réaliser des mesures d'élongation à la rupture. La moyenne de ces 5 mesures est de l'ordre de 170 %, et est à comparer avec une élongation de l'ordre de 350 % pour la même formulation, extrudée dans des conditions exactement similaires, mais dans laquelle la charge minérale est du MDH Magnifin H10 de Albemarle en remplacement de la dolomie semi-hydratée n°4.

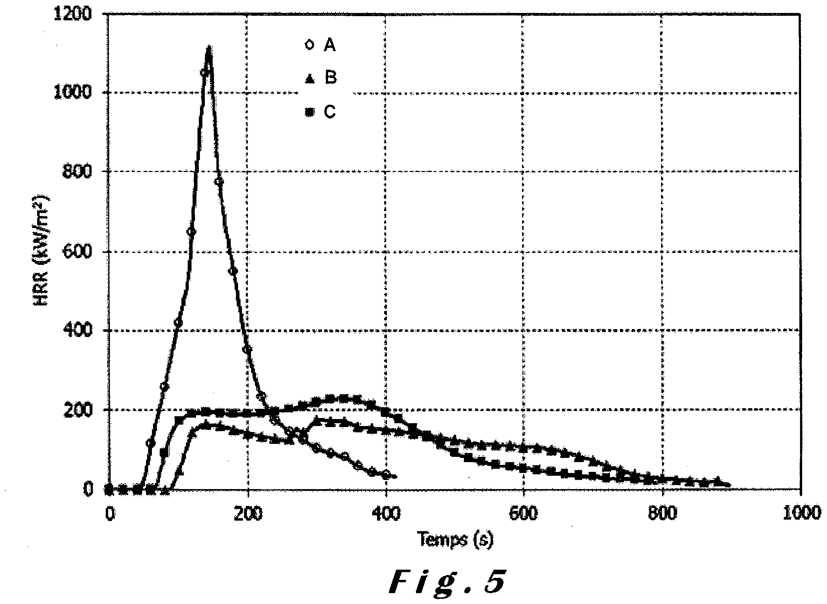

Des tests au feu par cône calorimétrie ont été réalisés sur les granulés. Les résultats de ces tests sont illustrés sur la figure 5 (courbe C), où ils sont comparés avec les résultats du test de cône calorimétrie de la même composition polymère non chargée (courbe A) et d'une composition identique chargée avec 60 % en masse de MDH (Magnifin H10) (courbe B). Ces courbes confirment une fois de plus l'effet retardateur de flamme très net de la dolomie semi-hydratée, effet quasiment similaire à celui du MDH (d'après le maximum de la courbe HRR) malgré un temps d'ignition plus court que celui observé pour la composition à base de MDH (selon l'art antérieur).

Les résidus obtenus à l'issue de ces essais de cône calorimétrie sont présentés aux figures 6 et 7 pour les compositions à base de dolomie semi-hydratée n°4 et à base de MDH, respectivement. La figure 6, comme les figures 2A et 2B, illustre la formation d'un résidu cohésif et gonflé à l'issue de la combustion de la composition chargée avec la dolomie semi-hydratée. Au contraire, le résidu de combustion de la composition à base de MDH selon l'art antérieur (figure 7) n'est pas cohésif et se casse en morceaux. Le résidu obtenu à partir de la composition à base de dolomie semi-hydratée est également nettement plus blanc que celui obtenu dans le cas de la composition avec du MDH.

| **Tableau 1.-** | Dolomie semi-hydratée n°1 grade A (exemple 1) | | Dolomie semi-hydratée n° 1 grade B (exemples 2, 4 et 5) | | Dolomie semi-hydratée n° 1 grade C (exemple 3) | |
|---|---|---|---|---|---|---|
| | % mass. | Nombre de moles | % mass. | Nombre de moles | % mass. | Nombre de moles |
| CaCO₃ | 5,7 | a = 0,057 | 4,8 | a = 0,048 | 15,1 | a = 0,151 |
| Ca(OH)₂ | 52,5 | b = 0,708 | 55,3 | b = 0,747 | 47,6 | b = 0,642 |
| Mg(OH)₂ | 10,9 | c = 0,186 | 11,1 | c = 0,190 | 16,1 | c = 0,277 |
| MgO | 24,9 | d = 0,618 | 24,6 | d = 0,610 | 18,8 | d = 0,467 |
| CaO | 3,4 | e = 0,061 | 1,8 | e = 0,032 | 0,0 | e = 0,000 |
| Ca/Mg (mol) | | 1,03 | | 1,03 | | 1,07 |
| Somme impuretés ⁽¹⁾ | 2,19 ± 0,15 | | 2,45 ± 0,15 | | 1,50 ± 0,15 | |
| Fe₂O₃ | 0,56 ± 0,05 | | 0,45 ± 0,05 | | 0,41 ± 0,05 | |
| Humidité 150 °C | 0,50 ± 0,02 | | 0,80 ± 0,02 | | 1,50 ± 0,02 | |
| Surface BET (m²/g) | 10,0 | | 11,3 | | 11,0 | |
| Granulométrie 1 ⁽²⁾ | | | | | | |
| d₃ (µm) | 0,6 | | 0,6 | | 0,7 | |
| d₁₀ (µm) | 1,2 | | 1,1 | | 1,0 | |
| d₅₀ (µm) | 4,7 | | 3,2 | | 2,4 | |
| d₉₀ (µm) | 13,0 | | 7,4 | | 6,2 | |
| d₉₇ (µm) | 36,2 | | 9,8 | | 30,1 | |
| d₁₀₀ (µm) | 92,1 | | 76,4 | | 69,6 | |
| Granulométrie 2 ⁽³⁾ | | | | | | |
| d₃ (µm) | 0,5 | | 0,5 | | 0,5 | |
| d₁₀ (µm) | 1,0 | | 0,9 | | 0,8 | |
| d₅₀ (µm) | 3,2 | | 2,7 | | 1,7 | |
| d₉₀ (µm) | 7,4 | | 6,2 | | 3,5 | |
| d₉₇ (µm) | 9,4 | | 7,4 | | 4,7 | |
| d₁₀₀ (µm) | 15,7 | | 11,8 | | 8,2 | |
| T décomposition Mg(OH)₂ (°C) | 250-420 °C | | 250-420 °C | | 250-400 °C | |
| T décomposition Ca(OH)₂ (°C) | 420-600 °C | | 420-600 °C | | 400-540 °C | |
| T 95% (°C) | 440 °C | | 443°C | | 380 °C | |
| ⁽¹⁾ : SiO₂ + Al₂O₃ + Fe₂O₃ + MnO + P₂O₅ + K₂O + SO₃ | | | | | | |
| ⁽²⁾ : mesure de la taille des agglomérats par granulométrie laser sur la poudre non désagglomérée | | | | | | |
| ⁽³⁾ : mesure de la taille des agrégats par granulométrie laser sur la poudre désagglomérée par ultrasons | | | | | | |

**Tableau 2.-**

| Exemple | Matrice polymère | Charge minérale | % massique de charge minérale dans la composition | Elongation à la rupture (%) | | Résilience (kJ/m²) | |
|---|---|---|---|---|---|---|---|
| | | | | Valeur | Erreur (±) | Valeur | Erreur (±) |
| | EVA | - | - | 300 | 35 | 6 | 1 |
| | EVA | ATH Martinal OL 107 LEO | 60 | 113 | 20 | 20 | 1 |
| | EVA | MDH Magnifin H10 | 60 | 167 | 24 | 24 | 3 |
| 1 | EVA | Dolomie semi-hydratée n° 1 grade A | 60 | 44 | 3 | 24 | 2 |
| 2 | EVA | Dolomie semi-hydratée n° 1 grade B | 60 | 62 | 4 | 28 | 2 |
| 3 | EVA | Dolomie semi-hydratée n° 1 grade C | 60 | 61 | 6 | 28 | 2 |
| | MDPE | - | - | 716 | 14 | 61 | 4 |
| | MDPE | ATH Martinal OL 107 LEO | 50 | 7 | 2 | 2 | 1 |
| | MDPE | MDH Magnifin H10 | 50 | 12 | 9 | 10 | 1 |
| 4 | MDPE | Dolomie semi-hydratée n° 1 grade B | 50 | 6 | 1 | 4 | 1 |
| 5 | MDPE | Dolomie semi-hydratée n° 1 grade B traitée 4 % de stéarate Ca | 50 | 14 | 3 | 4 | 1 |

| **Tableau 3.-** | Dolomie semi-hydratée n°2 (exemple 6) | | Dolomie semi-hydratée n°3 (exemple 7) | |
|---|---|---|---|---|
| | % mass. | Nombre de moles | % mass. | Nombre de moles |
| CaCO₃ | 10,1 | 0,101 | 6,0 | 0,060 |
| Ca(OH)₂ | 51,5 | 0,695 | 42,6 | 0,575 |
| Mg(OH)₂ | 3,2 | 0,055 | 3,9 | 0,067 |
| MgO | 27,5 | 0,682 | 29,4 | 0,730 |
| CaO | 1,0 | 0,018 | 13,1 | 0.233 |
| Ca/Mg (mol) | | 1,10 | | 1,09 |
| Somme impuretés ⁽¹⁾ | 2,24 | | 4,92 | |
| Fe₂O₃ | 0,83 | | 1,09 | |
| Humidité 150 °C | 0,73 | | 0,50 | |
| Surface BET (m²/g) | 10,7 | | 10,3 | |
| Granulométrie 1 ⁽²⁾ | | | | |
| d₃ (µm) | 0,7 | | 0,6 | |
| d₁₀ (µm) | 1,0 | | 1,0 | |
| d₅₀ (µm) | 2,2 | | 2,9 | |
| d₉₀ (µm) | 5,6 | | 9,8 | |
| d₉₇ (µm) | 7,4 | | 30,1 | |
| d₁₀₀ (µm) | 13,0 | | 83,9 | |
| Granulométrie 2 ⁽³⁾ | | | | |
| d₃ (µm) | 0,5 | | 0,5 | |
| d₁₀ (µm) | 0,7 | | 0,9 | |
| d₅₀ (µm) | 1,8 | | 2,4 | |
| d₉₀ (µm) | 5,6 | | 6,8 | |
| d₉₇ (µm) | 7,4 | | 8,9 | |
| d₁₀₀(µm) | 14,3 | | 15,7 | |
| T décomposition MgOH)₂ (°C) | 250-400 | | 250-400 | |
| T décomposition Ca(OH)₂ (°C) | 400-600 | | 400-600 | |
| T 95% (°C) | 455 | | 488 | |
| ⁽¹⁾ : SiO₂ + Al₂O₃ + Fe₂O₃ + MnO + P₂O₅ + K₂O + SO₃ | | | | |
| ⁽²⁾ : mesure de la taille des agglomérats par granulométrie laser sur la poudre non désagglomérée | | | | |
| ⁽³⁾ : mesure de la taille des agrégats par granulométrie laser sur la poudre désagglomérée par ultrasons | | | | |

**Tableau 4.-**

| Matériau | LOI |
|---|---|
| EVA | 21 |
| Composition de l'exemple 1 (EVA + 60 % de dolomie n°1 de grade A) | 25 |
| Composition de l'exemple 2 (EVA + 60 % de dolomie n°1 de grade B) | 24 |

| **Tableau 5.-** | Dolomie semi-hydratée n°4 (exemple 9) | |
|---|---|---|
| | % mass. | Nombre de moles |
| CaCO₃ | 7,6 | 0,076 |
| Ca(OH)₂ | 53,1 | 0,717 |
| Mg(OH)₂ | 9,5 | 0,163 |
| MgO | 25,5 | 0,623 |
| CaO | 2,5 | 0,048 |
| Ca/Mg (mol) | | 1,07 |
| Somme impuretés ⁽¹⁾ | 1,8 | |
| Fe₂O₃ | 0,4 | |
| Humidité 150 °C | 1,2 | |
| Granulométrie 1 ⁽²⁾ | | |
| d₃ (µm) | 0,7 | |
| d₁₀ (µm) | 1,2 | |
| d₅₀ (µm) | 4,4 | |
| d₉₀ (µm) | 9,2 | |
| d₉₇ (µm) | 11,2 | |
| d₁₀₀ (µm) | 17,2 | |
| Granulométrie 2 ⁽³⁾ | | |
| d₃ (µm) | 0,7 | |
| d₁₀ (µm) | 1,0 | |
| d₅₀ (µm) | 3,6 | |
| d₉₀ (µm) | 7,7 | |
| d₉₇ (µm) | 9,3 | |
| d₁₀₀ (µm) | 14,3 | |
| T décomposition Mg(OH)₂ (°C) | 250-420 | |
| T décomposition Ca(OH)₂ (°C) | 420-600 | |
| T 95% (°C) | 452 | |
| ⁽¹⁾ : SiO₂ + Al₂O₃ + Fe₂O₃ + MnO + P₂O₅ + K₂O + SO₃ | | |
| ⁽²⁾ : mesure de la taille des agglomérats par granulométrie laser sur la poudre non désagglomérée | | |
| ⁽³⁾ : mesure de la taille des agrégats par granulométrie laser sur la poudre désagglomérée par ultrasons | | |

**Tableau 6.-**

| **Produits** | **Proportions massiques dans la composition** |
|---|---|
| Co-polymère d'ethylene et d'octene (Exact 8203, Borealis) | 17,7 |
| EVA (Alcudia PA440, Repsol) | 15,0 |
| Polyethylène greffé anhydride maléique (Fusabond E226, Du Pont) | 4,0 |
| Antioxydant (AO 25, Shulman) | 3,3 |
| Dolomie semi-hydratée n°4 | 60,0 |

Il est bien entendu que la présente invention n'est en aucune façon limitée aux formes de réalisations décrites ci-dessus et que bien des modifications peuvent y être apportées sans sortir du cadre des revendications annexées.

## Revendications

1. Composition polymère ignifugée comprenant un polymère et une charge minérale ignifuge ou ignifugeante pulvérulente comprenant un composé calcique et un composé magnésien, **caractérisée en ce que** ladite charge minérale comprend une dolomie semi-hydratée répondant à la formule générale aCaCO₃.bCa(OH)₂.cMg(OH)₂.dMgO.eCaO, a, b, c, d et e étant des fractions molaires avec (a + b + e)/(c + d) étant compris entre 0,8 et 1,2 et avec d/c étant supérieur à 1 et présentant des valeurs telles que de b représente la fraction molaire correspondant à une proportion en poids ≥ 15%, c représente la fraction molaire correspondant à une proportion en poids ≥ 1 %, d représente la fraction molaire correspondant à une proportion en poids ≥ 1 %, a et e représentant respectivement des fractions molaires correspondant à des proportions en poids étant toutes deux ≥ 0 %, lesdites proportions en poids étant données par rapport au poids total de ladite dolomie semi-hydratée et **en ce que** ladite charge minérale comprend des agglomérats d'agrégats de particules, ladite charge minérale étant incorporée à hauteur de 1 à 80 %, avantageusement de 40 à 75 % en poids dans la composition polymère ignifugée.

2. Composition polymère ignifugée selon la revendication 1, dans laquelle lesdits agrégats de particules de la charge minérale présentent un d₉₇ < 30 µm, de préférence < 20 µm, un d₉₀ < 15 µm, de préférence < 10 µm, un d₅₀ < 5 µm, de préférence < 4 µm et un d₃ > 0,3 µm de préférence > 0,4 µm après mise en suspension dans du méthanol.

3. Composition polymère ignifugée selon la revendication 1 ou la revendication 2, dans laquelle lesdits agglomérats d'agrégats de particules de la charge minérale présentent un d₉₇ < 150 µm, de préférence < 100 µm, un d₉₀ inférieur à 30 µm, de préférence < 20 µm, un d₅₀ < à 8 µm, de préférence < 5 µm et un d₃ > 0,4 µm de préférence > 0,5 µm mesurés après mise en suspension dans du méthanol.

4. Composition polymère ignifugée selon l'une quelconque des revendications 1 à 3, dans laquelle la charge minérale présente des fractions molaires telles que (a + b+e)/(c + d) est comprise dans la plage allant de 0,90 à 1,15, de préférence de 0,95 à 1,10.

5. Composition polymère ignifugée selon l'une quelconque des revendications 1 à 4, dans laquelle la charge minérale comprend de 1 à 20 % en poids, de préférence moins de 18 % en poids, de manière plus préférentielle moins de 10 % en poids, de manière encore plus préférentielle moins de 8 % en poids, en particulier moins de 6% en poids, plus particulièrement de 2 à 6% en poids de CaCO₃ par rapport au poids total de ladite dolomie semi-hydratée.

6. Composition polymère ignifugée selon l'une quelconque des revendications 1 à 5, dans laquelle la charge minérale comprend moins de 15 % en poids de CaO, de préférence moins de 10 % en poids, de manière plus préférentielle moins de 5%, en particulier moins de 3% en poids, plus particulièrement moins de 2% en poids par rapport au poids total de ladite dolomie semi-hydratée..

7. Composition polymère ignifugée selon l'une quelconque des revendications 1 à 6, dans laquelle la charge minérale comprend plus de 5 % en poids, de préférence plus de 10 % en poids avantageusement plus de 15%, de façon préférentielle plus de 20% de MgO par rapport au poids total de ladite dolomie semi-hydratée et comprenant moins de 41 % en poids, de préférence moins de 30% en poids de MgO par rapport au poids total de ladite dolomie semi-hydratée.

8. Composition polymère ignifugée selon l'une quelconque des revendications 1 à 7, dans laquelle la charge minérale comprend de 2 à 51 % en poids, de préférence de 3 à 40 % en poids, de manière préférentielle de 6 à 30% en poids, de manière encore plus préférentielle de 8 à 25 % en poids et en particulier de 10 à 20% en poids de Mg(OH)₂ par rapport au poids total de ladite dolomie semi-hydratée.

9. Composition polymère ignifugée selon l'une quelconque des revendications 1 à 8, dans laquelle la charge minérale comprend de 15 à 69 % en poids, avantageusement de 30 à 65 %, de préférence de 40 à 60 %, en particulier de 45 à 55 % en poids de Ca(OH)₂ par rapport au poids total de ladite dolomie semi-hydratée.

10. Composition polymère ignifugée selon l'une quelconque des revendications 1 à 9, dans laquelle la charge minérale présente une surface spécifique mesurée par manométrie d'adsorption d'azote et calculée selon la méthode BET comprise entre 6 et 35 m²/g, de préférence de 7 à 20 m²/g.

11. Composition polymère ignifugée selon l'une quelconque des revendications 1 à 10, comprenant en outre un agent de surface ou un agent de couplage tel qu'un silane ou un acide gras pour le traitement de surface de ladite charge minérale.

12. Composition polymère ignifugée selon l'une quelconque des revendications 1 à 11, dans laquelle ledit polymère est un polymère organique thermoplastique.

13. Procédé de fabrication d'une composition polymère ignifugée selon l'une quelconque des revendications 1 à 12, comprenant une étape de mélange de ladite charge minérale avec un polymère organique.

14. Utilisation d'une charge minérale pulvérulente comme agent retardateur de flamme dans une composition polymère ignifugée, ladite charge minérale comprenant un composé calcique et un composé magnésien, **caractérisée en ce que** ladite charge minérale comprend une dolomie semi-hydratée répondant à la formule générale aCaCO₃.bCa(OH)₂.cMg(OH)₂.dMgO.eCaO, a, b, c, d et e étant des fractions molaires avec (a + b + e)/(c + d) étant compris entre 0,8 et 1,2 et avec d/c étant supérieur à 1 et présentant des valeurs telles que de b représente la fraction molaire correspondant à une proportion en poids ≥ 15%, c représente la fraction molaire correspondant à une proportion en poids ≥ 1 %, d représente la fraction molaire correspondant à une proportion en poids ≥ 1 %, a et e représentant respectivement des fractions molaires correspondant à des proportions en poids étant toutes deux ≥ 0 %, lesdites proportions en poids étant données par rapport au poids total de ladite dolomie semi-hydratée et **en ce que** ladite charge minérale comprend des agglomérats d'agrégats de particules, ladite charge minérale étant incorporée à hauteur de 1 à 80 %, avantageusement de 40 à 75 % en poids dans la composition polymère ignifugée.

15. Utilisation selon la revendication 14, dans laquelle lesdits agrégats de particules de la charge minérale présentent un d₉₇ < 30 µm, de préférence < 20 µm, un d₉₀ < 15 µm, de préférence < 10 µm, un d₅₀ < 5 µm, de préférence < 4 µm et un d₃ > 0,3 µm de préférence > 0,4 µm après mise en suspension dans du méthanol.

16. Utilisation selon la revendication 14 ou la revendication 15, dans laquelle lesdits agglomérats d'agrégats de particules de la charge minérale présentent un d₉₇ < 150 µm, de préférence < 100 µm, un d₉₀ inférieur à 30 µm, de préférence < 20 µm, un d₅₀ < à 8 µm, de préférence < 5 µm et un d₃ > 0,4 µm de préférence > 0,5 µm mesurés après mise en suspension dans du méthanol.

17. Utilisation selon l'une quelconque des revendications 14 à 16, dans laquelle la charge minérale présente des fractions molaires telles que (a + b+e)/(c + d) est comprise dans la plage allant de 0,90 à 1,15, de préférence de 0,95 à 1,10.

18. Utilisation selon l'une quelconque des revendications 14 à 17, dans laquelle la charge minérale comprend de 1 à 20 % en poids, de préférence moins de 18 % en poids, de manière plus préférentielle moins de 10 % en poids, de manière encore plus préférentielle moins de 8 % en poids, en particulier moins de 6% en poids, plus particulièrement de 2 à 6% en poids de CaCO₃ par rapport au poids total de ladite dolomie semi-hydratée.

19. Utilisation selon l'une quelconque des revendications 14 à 18, dans laquelle la charge minérale comprend moins de 15 % en poids de CaO, de préférence moins de 10 % en poids, de manière plus préférentielle moins de 5%, en particulier moins de 3% en poids, plus particulièrement moins de 2% en poids par rapport au poids total de ladite dolomie semi-hydratée.

20. Utilisation selon l'une quelconque des revendications 14 à 19, dans laquelle la charge minérale comprend plus de 5 % en poids, de préférence plus de 10 % en poids avantageusement plus de 15%, de façon préférentielle plus de 20% de MgO par rapport au poids total de ladite dolomie semi-hydratée et comprenant moins de 41 % en poids, de préférence moins de 30% en poids de MgO par rapport au poids total de ladite dolomie semi-hydratée.

21. Utilisation selon l'une quelconque des revendications 14 à 20, dans laquelle la charge minérale comprend de 2 à 51 % en poids, de préférence de 3 à 40 % en poids, de manière préférentielle de 6 à 30% en poids, de manière encore plus préférentielle de 8 à 25 % en poids et en particulier de 10 à 20% en poids de Mg(OH)₂ par rapport au poids total de ladite dolomie semi-hydratée.

22. Utilisation selon l'une quelconque des revendications 14 à 21, dans laquelle la charge minérale comprend de 15 à 69 % en poids, avantageusement de 30 à 65 %, de préférence de 40 à 60 %, en particulier de 45 à 55 % en poids de Ca(OH)₂ par rapport au poids total de ladite dolomie semi-hydratée.

23. Utilisation selon l'une quelconque des revendications 14 à 22, dans laquelle la charge minérale présente une surface spécifique mesurée par manométrie d'adsorption d'azote et calculée selon la méthode BET comprise entre 6 et 35 m²/g, de préférence de 7 à 20 m²/g.

24. Utilisation selon l'une quelconque des revendications 14 à 23, dans laquelle ladite composition polymère ignifugée comprend un polymère organique en particulier, un polymère organique thermoplastique.

25. Utilisation selon l'une quelconque des revendications 14 à 24, dans laquelle ledit polymère est de type polyéthylénique, à hauteur de 20 à 99%, avantageusement de 40 à 60% en poids, de préférence, à hauteur d'environ 50% en poids, par rapport au poids total de ladite composition polymère ignifugée et dans laquelle ladite charge minérale est comprise entre 1 et 80 %, avantageusement 40 et à 60 % en poids, par rapport au poids total de ladite composition polymère ignifugée.

26. Utilisation l'une quelconque des revendications 14 à 24, dans laquelle ledit polymère est de type polyoléfine, en particulier, de type éthylène-acétate de vinyle (EVA), à hauteur de 20 à 99 %, avantageusement de 25 à 60% en poids, par rapport au poids total de ladite composition polymère ignifugée et dans laquelle ladite charge minérale est comprise entre 1 et 80 %, avantageusement 40 et 75 % en poids, par rapport au poids total de ladite composition polymère ignifugée.

## Patentansprüche

1. Flammhemmende Polymerzusammensetzung, die ein Polymer und einen pulverförmigen flammhemmenden oder feuerhemmenden mineralischen Füllstoff umfasst, der eine Kalkverbindung und eine Magnesiumverbindung umfasst, **dadurch gekennzeichnet, dass** der erwähnte mineralische Füllstoff einen halb hydratisierten Dolomit mit der allgemeinen Formel aCaCO₃.bCa(OH)₂.CMg(OH)₂.dMgO.eCaO umfasst, wobei a, b, c, d und e molare Stoffmengenanteile sind, wobei (a + b + e)/(c + d) zwischen 0,8 und 1,2 liegt und d/c höher als 1 ist, und solche Werte aufweisen, dass b für den Stoffmengenanteil steht, der einem Gewichtsverhältnis ≥ 15 % entspricht, c für den Stoffmengenanteil steht, der einem Gewichtsverhältnis ≥ 1 % entspricht, d für den Stoffmengenanteil steht, der einem Gewichtsverhältnis ≥ 1% entspricht, a und e respektive für molare Stoffmengenanteile stehen, die Gewichtsverhältnissen von jeweils ≥ 0 % entsprechen, wobei die erwähnten Gewichtsverhältnisse im Verhältnis zum Gesamtgewicht des erwähnten halb hydratisierten Dolomits angegeben sind, und dadurch, dass der erwähnte mineralische Füllstoff Agglomerate von Partikelaggregaten umfasst, wobei der erwähnte mineralische Füllstoff im Umfang von 1 bis 80 Gew.-%, vorteilhafterweise von 40 bis 75 Gew.-%, in die flammhemmende Polymerzusammensetzung aufgenommen ist.

2. Flammhemmende Polymerzusammensetzung nach Anspruch 1, wobei die erwähnten Partikelaggregate des mineralischen Füllstoffs einen d₉₇ < 30 µm, bevorzugt <20 µm, einen d₉₀ <15 µm, bevorzugt <10 µm, einen d₅₀ <5 µm, bevorzugt <4 µm, und einen d₃ > 0,3 µm, bevorzugt > 0,4 µm, aufweisen, nach Suspendieren in Methanol.

3. Flammhemmende Polymerzusammensetzung nach Anspruch 1 oder Anspruch 2, wobei die erwähnten Agglomerate von Partikelaggregaten des mineralischen Füllstoffs einen d₉₇ < 150 µm, bevorzugt < 100 µm, einen d₉₀ niedriger als 30 µm, bevorzugt < 20 µm, einen d₅₀ < 8 µm, bevorzugt < 5 µm, und einen d₃ > 0,4 µm, bevorzugt > 0,5 µm, aufweisen, gemessen nach Suspendieren in Methanol.

4. Flammhemmende Polymerzusammensetzung nach irgendeinem der Ansprüche 1 bis 3, wobei der mineralische Füllstoff derartige molare Stoffmengenanteile aufweist, dass (a + b + e)/(c + d) im Bereich von 0,90 bis 1,15 liegt, bevorzugt von 0,95 bis 1,10.

5. Flammhemmende Polymerzusammensetzung nach irgendeinem der Ansprüche 1 bis 4, in der der mineralische Füllstoff 1 bis 20 Gew.-%, bevorzugt weniger als 18 Gew.-%, noch besser weniger als 10 Gew.-%, noch bevorzugter weniger als 8 Gew.-%, insbesondere weniger als 6 Gew.-%, genauer gesagt von 2 bis 6 Gew.-% CaCO₃ im Verhältnis zum Gesamtgewicht des erwähnten halb hydratisierten Dolomits umfasst.

6. Flammhemmende Polymerzusammensetzung nach irgendeinem der Ansprüche 1 bis 5, in der der mineralische Füllstoff weniger als 15 Gew.-% CaO, bevorzugt weniger als 10 Gew.-%, noch besser weniger als 5 Gew.-%, insbesondere weniger als 3 Gew.-%, genauer gesagt weniger als 2 Gew.-% im Verhältnis zum Gesamtgewicht des erwähnten halb hydratisierten Dolomits umfasst.

7. Flammhemmende Polymerzusammensetzung nach irgendeinem der Ansprüche 1 bis 6, in der der mineralische Füllstoff mehr als 5 Gew.-%, bevorzugt mehr als 10 Gew.-%, vorteilhafterweise mehr als 15 Gew.-%, bevorzugt mehr als 20 Gew.-% MgO im Verhältnis zum Gesamtgewicht des erwähnten halb hydratisierten Dolomits umfasst und der weniger als 41 Gew.-%, bevorzugt weniger als 30 Gew.-% MgO im Verhältnis zum Gesamtgewicht des erwähnten halb hydratisierten Dolomits umfasst.

8. Flammhemmende Polymerzusammensetzung nach irgendeinem der Ansprüche 1 bis 7, in der der mineralische Füllstoff 2 bis 51 Gew.-%, bevorzugt 3 bis 40 Gew.-%, vorzugsweise 6 bis 30 Gew.-%, noch bevorzugter 8 bis 25 Gew.-% und insbesondere 10 bis 20 Gew.-% Mg(OH)₂ im Verhältnis zum Gesamtgewicht des erwähnten halb hydratisierten Dolomits umfasst.

9. Flammhemmende Polymerzusammensetzung nach irgendeinem der Ansprüche 1 bis 8, in der der mineralische Füllstoff 15 bis 69 Gew.-%, vorteilhafterweise 30 bis 65 Gew.-%, bevorzugt 40 bis 60 Gew.-%, insbesondere 45 bis 55 Gew.-% Ca(OH)₂ im Verhältnis zum Gesamtgewicht des erwähnten halb hydratisierten Dolomits umfasst.

10. Flammhemmende Polymerzusammensetzung nach irgendeinem der Ansprüche 1 bis 9, in der der mineralische Füllstoff eine spezifische Oberfläche, manometrisch bestimmt durch Stickstoffadsorption und berechnet nach dem BET-Verfahren, von zwischen 6 und 35 m²/g aufweist, bevorzugt von 7 bis 20 m²/g.

11. Flammhemmende Polymerzusammensetzung nach irgendeinem der Ansprüche 1 bis 10, welche ferner eine oberflächenaktive Substanz oder einen Haftvermittler wie ein Silan oder eine Fettsäure für die Oberflächenbehandlung des erwähnten mineralischen Füllstoffs umfasst.

12. Flammhemmende Polymerzusammensetzung nach irgendeinem der Ansprüche 1 bis 11, wobei das erwähnte Polymer ein thermoplastisches organisches Polymer ist.

13. Verfahren zur Herstellung einer flammhemmenden Polymerzusammensetzung nach irgendeinem der Ansprüche 1 bis 12, welches einen Schritt der Mischung des erwähnten mineralischen Füllstoffs mit einem organischen Polymer umfasst.

14. Verwendung eines pulverförmigen mineralischen Füllstoffs als flammverzögernde Substanz in einer flammhemmenden Polymerzusammensetzung, wobei der erwähnte mineralische Füllstoff eine Kalkverbindung und eine Magnesiumverbindung umfasst, **dadurch gekennzeichnet, dass** der erwähnte mineralische Füllstoff einen halb hydratisierten Dolomit mit der allgemeinen Formel aCaCO₃.bCa(OH)₂.cMg(OH)₂.dMgO.eCaO umfasst, wobei a, b, c, d und e molare Stoffmengenanteile sind, wobei (a + b + e)/(c + d) zwischen 0,8 und 1,2 liegt und d/c höher als 1 ist, und solche Werte aufweisen, dass b für den Stoffmengenanteil steht, der einem Gewichtsverhältnis ≥ 15 % entspricht, c für den Stoffmengenanteil steht, der einem Gewichtsverhältnis ≥ 1 % entspricht, d für den Stoffmengenanteil steht, der einem Gewichtsverhältnis ≥ 1 % entspricht, a und e respektive für molare Stoffmengenanteile stehen, die Gewichtsverhältnissen von jeweils ≥ 0 % entsprechen, wobei die erwähnten Gewichtsverhältnisse im Verhältnis zum Gesamtgewicht des erwähnten halb hydratisierten Dolomits angegeben sind, und dadurch, dass der erwähnte mineralische Füllstoff Agglomerate von Partikelaggregaten umfasst, wobei der erwähnte mineralische Füllstoff im Umfang von 1 bis 80 Gew.-%, vorteilhafterweise von 40 bis 75 Gew.-%, in die flammhemmende Polymerzusammensetzung aufgenommen ist.

15. Verwendung nach Anspruch 14, wobei die erwähnten Partikelaggregate des mineralischen Füllstoffs einen d₉₇ < 30 µm, bevorzugt < 20 µm, einen d₉₀ < 15 µm, bevorzugt < 10 µm, einen d₅₀ < 5 µm, bevorzugt < 4 µm, und einen d₃ > 0,3 µm, bevorzugt > 0,4 µm, aufweisen, nach Suspendieren in Methanol.

16. Verwendung nach Anspruch 14 oder Anspruch 15, wobei die erwähnten Agglomerate von Partikelaggregaten des mineralischen Füllstoffs einen d₉₇ < 150 µm, bevorzugt < 100 µm, einen d₉₀ niedriger als 30 µm, bevorzugt < 20 µm, einen d₅₀ < 8 µm, bevorzugt < 5 µm, und einen d₃ > 0,4 µm, bevorzugt > 0,5 µm, aufweisen, gemessen nach Suspendieren in Methanol.

17. Verwendung nach irgendeinem der Ansprüche 14 bis 16, wobei der mineralische Füllstoff derartige molare Stoffmengenanteile aufweist, dass (a + b + e)/(c + d) im Bereich von 0,90 bis 1,15 liegt, bevorzugt von 0,95 bis 1,10.

18. Verwendung nach irgendeinem der Ansprüche 14 bis 17, wobei der mineralische Füllstoff 1 bis 20 Gew.-%, bevorzugt weniger als 18 Gew.-%, noch besser weniger als 10 Gew.-%, noch bevorzugter weniger als 8 Gew.-%, insbesondere weniger als 6 Gew.-%, genauer gesagt von 2 bis 6 Gew.-% CaCO₃ im Verhältnis zum Gesamtgewicht des erwähnten halb hydratisierten Dolomits umfasst.

19. Verwendung nach irgendeinem der Ansprüche 14 bis 18, wobei der mineralische Füllstoff weniger als 15 Gew.-% CaO, bevorzugt weniger als 10 Gew.-%, noch besser weniger als 5 Gew.-%, insbesondere weniger als 3 Gew.-%, genauer gesagt weniger als 2 Gew.-% im Verhältnis zum Gesamtgewicht des erwähnten halb hydratisierten Dolomits umfasst.

20. Verwendung nach irgendeinem der Ansprüche 14 bis 19, wobei der mineralische Füllstoff mehr als 5 Gew.-%, bevorzugt mehr als 10 Gew.-%, vorteilhafterweise mehr als 15 Gew.-%, bevorzugt mehr als 20 Gew.-% MgO im Verhältnis zum Gesamtgewicht des erwähnten halb hydratisierten Dolomits umfasst und weniger als 41 Gew.-%, bevorzugt weniger als 30 Gew.-% MgO im Verhältnis zum Gesamtgewicht des erwähnten halb hydratisierten Dolomits umfasst.

21. Verwendung nach irgendeinem der Ansprüche 14 bis 20, wobei der mineralische Füllstoff 2 bis 51 Gew.-%, bevorzugt 3 bis 40 Gew.-%, vorzugsweise 6 bis 30 Gew.-%, noch bevorzugter 8 bis 25 Gew.-% und insbesondere 10 bis 20 Gew.-% Mg(OH)₂ im Verhältnis zum Gesamtgewicht des erwähnten halb hydratisierten Dolomits umfasst.

22. Verwendung nach irgendeinem der Ansprüche 14 bis 21, wobei der mineralische Füllstoff 15 bis 69 Gew.-%, vorteilhafterweise 30 bis 65 Gew.-%, bevorzugt 40 bis 60 Gew.-%, insbesondere 45 bis 55 Gew.-% Ca(OH)₂ im Verhältnis zum Gesamtgewicht des erwähnten halb hydratisierten Dolomits umfasst.

23. Verwendung nach irgendeinem der Ansprüche 14 bis 22, wobei der mineralische Füllstoff eine spezifische Oberfläche, manometrisch bestimmt durch Stickstoffadsorption und berechnet nach dem BET-Verfahren, von zwischen 6 und 35 m²/g aufweist, bevorzugt von 7 bis 20 m²/g.

24. Verwendung nach irgendeinem der Ansprüche 14 bis 23, wobei die erwähnte flammhemmende Polymerzusammensetzung ein organisches Polymer, insbesondere ein thermoplastisches organisches Polymer umfasst.

25. Verwendung nach irgendeinem der Ansprüche 14 bis 24, wobei das erwähnte Polymer polyethylenischer Art ist, im Umfang von 20 bis 99 Gew.-%, vorteilhafterweise von 40 bis 60 Gew.-%, bevorzugt im Umfang von ungefähr 50 Gew.-%, im Verhältnis zum Gesamtgewicht der erwähnten flammhemmenden Polymerzusammensetzung, und wobei der erwähnte mineralische Füllstoff im Umfang von zwischen 1 und 80 Gew.-% enthalten ist, vorteilhafterweise 40 und bis 60 Gew.-%, im Verhältnis zum Gesamtgewicht der erwähnten flammhemmenden Polymerzusammensetzung.

26. Verwendung nach irgendeinem der Ansprüche 14 bis 24, wobei das erwähnte Polymer polyolefiner Art ist, insbesondere vom Typ Ethylen-Vinylacetat (EVA), im Umfang von 20 bis 99 Gew.-%, vorteilhafterweise von 25 bis 60 Gew.-%, im Verhältnis zum Gesamtgewicht der erwähnten flammhemmenden Polymerzusammensetzung, und wobei der erwähnte mineralische Füllstoff im Umfang von zwischen 1 und 80 Gew.-% enthalten ist, vorteilhafterweise 40 und 75 Gew.-%, im Verhältnis zum Gesamtgewicht der erwähnten flammhemmenden Polymerzusammensetzung.

## Claims

1. A flame-retardant polymer composition comprising a polymer and a powdery fire-resistant or flame-retardant mineral filler comprising a calcium compound and a magnesium compound, **characterized in that** said mineral filler comprises a semi-hydrated dolime of fitting the general formula aCaCO₃.bCa(OH)₂.cMg(OH)₂.dMgO.eCaO, a, b, c, d and e being molar fractions with (a + b + e)/(c + d) being comprised between 0.8 and 1.2 and with d/c being greater than 1 and having values such as b represents the molar fraction corresponding to a weight proportion ≥ 15%, c represents the molar fraction corresponding to a weight proportion ≥ 1%, d represents the molar fraction corresponding to a weight proportion ≥ 1%, a and e respectively representing molar fractions corresponding to weight proportions being both ≥ 0%, said weight proportions being given relatively to the total weight of said semi-hydrated dolime and **in that** said mineral filler comprises agglomerates of aggregates of particles, said mineral filler being incorporated in an amount from 1 to 80%, advantageously from 40 to 75% by weight into the flame-retardant polymer composition.

2. The flame-retardant polymer composition according to claim 1, wherein said aggregates of particles of the mineral filler have a d₉₇ < 30 µm, preferably < 20 µm, a d₉₀ < 15 µm, preferably < 10 µm, a d₅₀ < 5 µm, preferably < 4 µm and a d₃ > 0.3 µm, preferably > 0.4 µm after having been suspended in methanol.

3. The flame-retardant polymer composition according to claim 1 or claim 2, wherein said agglomerates of aggregates of particles of the mineral filler have a d₉₇ < 150 µm, preferably < 100 µm, a d₉₀ of less than 30 µm, preferably < 20 µm, a d₅₀ < 8 µm, preferably < 5 µm and a d₃ > 0.4 µm, preferably > 0.5 µm measured after having been suspended in methanol.

4. The flame-retardant polymer composition according to any of claims 1 to 3, wherein the mineral filler has molar fractions such that (a + b + e)/(c + d) is comprised in the range from 0.90 to 1.15, preferably from 0.95 to 1.10.

5. The flame-retardant polymer composition according to any of claims 1 to 4, wherein the mineral filler comprises from 1 to 20% by weight, preferentially less than 18% by weight, more preferably less than 10% by weight, still more preferentially less than 8% by weight, in particular less than 6% by weight, more particularly from 2 to 6% by weight of CaCO₃ based on the total weight of said semi-hydrated dolime.

6. The flame-retardant polymer composition according to any of claims 1 to 5, wherein the mineral filler comprises less than 15% by weight of CaO, preferably less than 10% by weight, more preferentially less than 5%, in particular less than 3% by weight, more particularly less than 2% by weight based on the total weight of said semi-hydrated dolime.

7. The flame-retardant polymer composition according to any of claims 1 to 6, wherein the mineral filler comprises more than 5% by weight, preferably more than 10% by weight, advantageously more than 15%, preferentially more than 20% of MgO based on the total weight of said semi-hydrated dolime and comprising less than 41% by weight, preferably less than 30% by weight of MgO based on the total weight of said semi-hydrated dolime.

8. The flame-retardant polymer composition according to any of claims 1 to 7, wherein the mineral filler comprises from 2 to 51% by weight, preferably from 3 to 40% by weight, preferentially from 6 to 30% by weight, still more preferentially from 8 to 25% by weight and in particular from 10 to 20% by weight of Mg(OH)₂ based on the total weight of said semi-hydrated dolime.

9. The flame-retardant polymer composition according to any of claims 1 to 8, wherein the mineral filler comprises from 15 to 69% by weight, advantageously from 30 to 65%, preferably from 40 to 60%, in particular from 45 to 55% by weight of Ca(OH)₂ based on the total weight of said semi-hydrated dolime.

10. The flame-retardant polymer composition according to any of claims 1 to 9, wherein the mineral filler has a specific surface area measured by nitrogen adsorption manometry and calculated according to BET method comprised between 6 and 35 m²/g, preferably from 7 to 20 m²/g.

11. The flame-retardant polymer composition according to any of claims 1 to 10, further comprising a surface agent or a coupling agent such as a silane or a fatty acid for the surface treatment of said mineral filler.

12. The flame-retardant polymer composition according to any of claims 1 to 11, wherein said polymer is a thermoplastic organic polymer.

13. A method for manufacturing a flame-retardant polymer composition according to any of claims 1 to 12, comprising a step of mixing said mineral filler with an organic polymer.

14. The use of a powdery mineral filler as a flame retardant agent in a flame-retardant polymer composition, said mineral filler comprising a calcium compound and a magnesium compound, **characterized in that** said mineral filler comprises a semi-hydrated dolime of fitting the general formula aCaCO₃.bCa(OH)₂.cMg(OH)₂.dMgO. eCaO, a, b, c, d and e being molar fractions with (a + b + e)/(c + d) being comprised between 0.8 and 1.2 and with d/c being greater than 1 and having values such as b represents the molar fraction corresponding to a weight proportion ≥ 15%, c represents the molar fraction corresponding to a weight proportion ≥ 1%, d represents the molar fraction corresponding to a weight proportion ≥ 1%, a and e respectively representing molar fractions corresponding to weight proportions being both ≥ 0%, said weight proportions being given relatively to the total weight of said semi-hydrated dolime and **in that** said mineral filler comprises agglomerates of aggregates of particles, said mineral filler being incorporated in an amount from 1 to 80%, advantageously from 40 to 75% by weight into the flame-retardant polymer composition.

15. The use according to claim 14, wherein said aggregates of particles of the mineral filler have a d₉₇ < 30 µm, preferably < 20 µm, a d₉₀ < 15 µm, preferably < 10 µm, a d₅₀ < 5 µm, preferably < 4 µm and a d₃ > 0.3 µm, preferably > 0.4 µm after having been suspended in methanol.

16. The use according to claim 14 or claim 15, wherein said agglomerates of aggregates of particles of the mineral filler have a d₉₇ < 150 µm, preferably < 100 µm, a d₉₀ of less than 30 µm, preferably < 20 µm, a d₅₀ < 8 µm, preferably < 5 µm and a d₃ > 0.4 µm, preferably > 0.5 µm measured after having been suspended in methanol.

17. The use according to any of claims 14 to 16, wherein the mineral filler has molar fractions such that (a + b + e)/(c + d) is comprised in the range from 0.90 to 1.15, preferably from 0.95 to 1.10.

18. The use according to any of claims 14 to 17, wherein the mineral filler comprises from 1 to 20% by weight, preferentially less than 18% by weight, more preferentially less than 10% by weight, still more preferentially less than 8% by weight, in particular less than 6% by weight, more particularly from 2 to 6% by weight of CaCO₃ based on the total weight of said semi-hydrated dolime.

19. The use according to any of claims 14 to 18, wherein the mineral filler comprises less than 15% by weight of CaO, preferably less than 10% by weight, more preferentially less than 5%, in particular less than 3% by weight, more particularly less than 2% by weight based on the total weight of said semi-hydrated dolime.

20. The use according to any of claims 14 to 19, wherein the mineral filler comprises more than 5% by weight, preferably more than 10% by weight, advantageously more than 15%, preferentially more than 20% of MgO based on the total weight of said semi-hydrated dolime and comprising less than 41% by weight, preferably less than 30% by weight of MgO based on the total weight of said semi-hydrated dolime.

21. The use according to any of claims 14 to 20, wherein the mineral filler comprises from 2 to 51% by weight, preferably from 3 to 40% by weight, preferentially from 6 to 30% by weight, still more preferentially from 8 to 25% by weight and in particular from 10 to 20% by weight of Mg(OH)₂ based on the total weight of said semi-hydrated dolime.

22. The use according to any of claims 14 to 21, wherein the mineral filler comprises from 15 to 69% by weight, advantageously from 30 to 65%, preferably from 40 to 60%, in particular from 45 to 55% by weight of Ca(OH)₂ based on the total weight of said semi-hydrated dolime.

23. The use according to any of claims 14 to 22, wherein the mineral filler has a specific surface area measured by nitrogen adsorption manometry and calculated according to BET method comprised between 6 and 35 m²/g, preferably from 7 to 20 m²/g.

24. The use according to any of claims 14 to 23, wherein said flame-retardant polymer composition comprises an organic polymer in particular, a thermoplastic organic polymer.

25. The use according to any of claims 14 to 24, wherein said polymer is of the polyethylene type, in an amount from 20 to 99%, advantageously 40 to 60% by weight, preferably in an amount of about 50% by weight, based on the total weight of said flame-retardant polymer composition and wherein said mineral filler is comprised between 1 and 80%, advantageously 40 and to 60% by weight, based on the total weight of said flame-retardant polymer composition.

26. The use according to any of claims 14 to 24, wherein said polymer is of polyolefin type, in particular of the ethylene-vinyl acetate (EVA), in an amount from 20 to 99%, advantageously 25 to 60% by weight, based on the total weight of said flame-retardant polymer composition and wherein said mineral filler is comprised between 1 and 80%, advantageously from 40 and 75% by weight, based on the total weight of said flame-retardant polymer composition.
